# EUROPÄISCHE PATENTSCHRIFT

(11) **EP 3 017 854 B1**
(45) Veröffentlichungstag und Bekanntmachung des Hinweises auf die Patenterteilung: **05.08.2020**
(21) Anmeldenummer: 15187579.6
(22) Anmeldetag: 30.09.2015
(51) Int. Cl.: B01D 46/00, B01D 46/24, B01D 50/00

(54) **FILTER ZUR FILTRIERUNG VON FLUID**
FILTER FOR FILTERING OF FLUID
FILTRE DESTINÉ À FILTRER UN FLUIDE

(30) Priorität: 06.11.2014 DE 102014016301
(43) Veröffentlichungstag der Anmeldung: 11.05.2016
(73) Patentinhaber: MANN + HUMMEL GMBH, 71636 Ludwigsburg (DE)
(72) Erfinder: Schulz, Franziska, 67105 Schifferstadt (DE)

(56) Entgegenhaltungen:
- EP-A1- 1 174 171
- WO-A1-2009/106588
- WO-A2-2014/011218
- DE-A1-102008 011 186
- DE-U1-202007 014 821
- DE-U1-202008 017 059
- JP-A- H08 252 417
- US-A- 5 690 712
- US-A1- 2009 266 041
- US-A1- 2014 223 868

## Beschreibung

### Technisches Gebiet

Die Erfindung betrifft ein Hohlfilterelement, insbesondere Mehrfachbalg-Hohlfilterelement, eines Filters zur Filtrierung von Fluid, insbesondere Luft, Wasser, Kraftstoff, Öl oder Harnstoff-Wasserlösung, insbesondere einer Brennkraftmaschine, insbesondere eines Kraftfahrzeugs, mit wenigstens einem Filterbalg, welcher wenigstens ein zur Filtrierung des Fluids durchströmbares Filtermedium aufweist und welcher wenigstens einen Elementinnenraum wenigstens teilweise begrenzt, mit wenigstens einem Endkörper an einer bezüglich einer Elementachse axial vorderen und/oder einer hinteren Stirnseite des Hohlfilterelements und mit wenigstens einer Dichtung, die bezüglich der Elementachse wenigstens teilweise umfangsmäßig im Bereich wenigstens einer der Stirnseiten des Hohlfilterelements angeordnet ist.

Ferner betrifft die Erfindung einen Filter zur Filtrierung von Fluid, insbesondere Luft, Wasser, Kraftstoff, Öl oder Harnstoff-Wasserlösung, insbesondere einer Brennkraftmaschine, insbesondere eines Kraftfahrzeugs, mit wenigstens einem Filtergehäuse, welches wenigstens einen Einlass für zu filtrierendes Fluid und wenigstens einen Auslass für filtriertes Fluid aufweist, in dem wenigstens ein Hohlfilterelement, insbesondere Mehrfachbalg-Hohlfilterelement, derart angeordnet werden kann, dass es den wenigstens einen Einlass von dem wenigstens einen Auslass trennt, und welches wenigstens einen ersten Gehäuseteil mit wenigstens einer Einbauöffnung für das wenigstens eine Hohlfilterelement aufweist, die mit wenigstens einem zweiten Gehäuseteil verschlossen werden kann, wobei das wenigstens eine Hohlfilterelement wenigstens einen Filterbalg umfasst, der wenigstens ein zur Filtrierung des Fluids durchströmbares Filtermedium aufweisen, der wenigstens einen Elementinnenraum wenigstens teilweise begrenzt, mit wenigstens einem Endkörper an einer bezüglich einer Elementachse axial vorderen und/oder einer hinteren Stirnseite des Hohlfilterelements und mit wenigstens einer Dichtung, die bezüglich der Elementachse wenigstens teilweise umfangsmäßig im Bereich wenigstens einer der Stirnseiten des Hohlfilterelements angeordnet ist.

Außerdem betrifft die Erfindung ein Filtergehäuse eines Filters zur Filtrierung von Fluid, insbesondere Luft, Wasser, Kraftstoff, Öl oder Harnstoff-Wasserlösung, insbesondere einer Brennkraftmaschine, insbesondere eines Kraftfahrzeugs, welches wenigstens einen Einlass für zu filtrierendes Fluid und wenigstens einen Auslass für filtriertes Fluid aufweist, in dem wenigstens ein Hohlfilterelement, insbesondere ein Mehrfachbalg-Hohlfilterelement, derart angeordnet werden kann, dass es den wenigstens einen Einlass von dem wenigstens einen Auslass trennt, und welches wenigstens einen ersten Gehäuseteil mit wenigstens einer Einbauöffnung für das wenigstens eine Hohlfilterelement aufweist, die mit wenigstens einem zweiten Gehäuseteil verschlossen werden kann.

Schließlich betrifft die Erfindung eine Dichtung eines Hohlfilterelements.

### Stand der Technik

Aus der WO 2009/106588 A1 ist ein Luftfilter für eine Brennkraftmaschine bekannt, mit einem in einem Filtergehäuse angeordneten Hauptfilterelement. Dieses ist von einem zu filtrierenden Fluid zu durchströmen. Das Hauptfilterelement ist als Doppelbalgfilter mit zwei radial ineinander gesetzten Filterbälgen ausgebildet. Die Filterbälge sind in Radialrichtung zu durchströmen. Zwischen den Filterbälgen ist ein Strömungsraum für das Fluid gebildet. Dieser kommuniziert mit einer Stirnseite des Hauptfilterelementes, wobei jeder der Filterbälge als Sternfilter mit sternförmig angeordneten Filterfalten ausgebildet ist. An einer Stirnseite des Hauptfilterelementes befindet sich eine Dichtung zwischen einem der Filterbälge und dem Filtergehäuse. Das Hauptfilterelement wird durch einen seitlich in das Filtergehäuse einführbaren Einschub fixiert. Dies bedeutet, dass nach der Montage des Hauptfilterelements durch eine seitliche Öffnung des Filtergehäuses der Einschub in das Filtergehäuse einfährt. Durch die Montage des Einschubelements auf im Filtergehäuse verlaufenden Einschubschienen wird eine in Axialrichtung wirkende Dichtkraft erzeugt, das heißt, das zuvor in das Filtergehäuse eingesetzte Hauptfilterelement wird in axialer Richtung vorgespannt und an das Filtergehäuse angestellt.

In EP 1 174 171 A1 ist ein Filter mit einem Hohlfilterelement beschrieben, wobei das Filterelement ein gefaltetes Medium aufweist, welches einen inneren Hohlraum definiert, der sich entlang einer Achse erstreckt. Das Fluid wird im Wesentlichen axial durch das Filterelement geleitet, um den Strömungswiderstand zu minimieren. Das Filterelement dichtet radial außen gegen das Gehäuse ab.

Aus der Patentschrift US 5,690,712 A ist eine Luftfilteranordnung mit in einem Filtergehäuse angeordnetem Hohlfilterelement bekannt. Das Filterelement weist zwei Endscheiben auf, wobei in eine der Endscheiben eine zentrale Öffnung eingebracht ist, durch welche Feuchtigkeit ableitbar ist. Das Gehäuse ist dazu ausgebildet, Feuchteabfuhr zu ermöglichen, ohne die Dichtung zwischen Element und Gehäuse zu beeinträchtigen. Das Filterelement weist eine radial nach außen gerichtete Dichtung auf.

In JP H08 252 417 A ist ein Luftfilter mit zweiteiligem Gehäuse aus Kunstharz und zylindrischem Filterelement beschrieben. Ein Verbindungsstück verbindet die beiden Gehäuseteile. Die Abdichtung gegenüber dem Gehäuse erfolgt über eine radiale Außendichtung am Filterelement.

Der Erfindung liegt die Aufgabe zugrunde, einen Filter der eingangs genannten Art zu gestalten, bei welchem das Hohlfilterelement einfach und zuverlässig in das Filtergehäuse eingebaut werden kann und eine Reinfluidseite einfach und zuverlässig gegen eine Rohfluidseite abgedichtet werden kann.

### Offenbarung der Erfindung

Diese Aufgabe wird erfindungsgemäß durch einen Filter nach Anspruch 1 gelöst. Die wenigstens eine Dichtung weist wenigstens zwei umfängliche radial äußere, axial und radial zueinander beabstandete Dichtungsabschnitte auf, die mit wenigstens einer entsprechenden Dichtfläche eines Filtergehäuses des Filters bezüglich der Elementachse radial dichtend zusammenwirken

Erfindungsgemäß ist die wenigstens eine Dichtung im Bereich einer axialen Stirnseite angebracht, wobei die Abdichtung in bezüglich der Elementachse radialer Richtung erfolgt. Auf diese Weise kann die Abdichtung kraftmäßig von einer etwaigen axialen Abstützung des Hohlfilterelements, in dem Filtergehäuse getrennt werden. So können die Abstützung und die Abdichtung jeweils für sich verbessert werden.

Bei dem Hohlfilterelement kann es sich vorteilhafterweise um ein Rundfilterelement mit einem runden Querschnitt, ein ovales Rundfilterelement mit einem ovalen Querschnitt, ein flach-ovales Rundfilterelement mit einem abgeflachten ovalen Querschnitt, ein konisches Rundfilterelement, bei dem sich der runde Querschnitt in axialer Richtung zu Hauptachse verjüngt, ein konisch-ovales Rundfilterelement, bei dem sich der ovale Querschnitt in axialer Richtung zumindest in Richtung einer Querachse verjüngt, ein konisches flach-ovales Rundfilterelement, bei dem sich der flach-ovale Querschnitt in axialer Richtung zumindest in Richtung einer Querachse verjüngt, oder ein Hohlfilterelement mit einem andersartigen, insbesondere einem eckigen, Querschnitt und/oder einem andersartigen axialen Querschnittsverlauf in Richtung der Hauptachse, handeln. Wenigstens ein Elementinnenraum kann vorteilhafterweise als Strömungsraum für das zu filtrierende Fluid dienen. Der wenigstens eine Strömungsraum kann mit einer Stirnseite des Hohlfilterelements in Verbindung stehen. Der Strömungsraum kann sowohl zum Ableiten des gereinigten Fluids als auch zum Heranführen von ungereinigtem Fluid dienen. Wenigstens ein Filtermedium wenigstens eines Filterbalgs kann vorteilhafterweise bezüglich der Elementachse umfangsmäßig geschlossen oder offen sein. Das Filtermedium kann insbesondere sternförmig, bevorzugt zickzackförmig oder wellenförmig, gefaltet oder gebogen sein. Das Filtermedium kann auch ungefaltet oder ungebogen sein.

Wenigstens ein Filtermedium kann Filterpapier, Filtervlies oder ein andersartiges zur Filtrierung des Fluids geeignetes Filtermedium wenigstens aufweisen. Wenigstens ein Filtermedium kann einlagig oder mehrlagig sein.
Der wenigstens eine Endkörper kann vorteilhafterweise eine Endscheibe wenigstens aufweisen. Vorteilhafterweise kann der wenigstens eine Endkörper Kunststoff wenigstens aufweisen. Der wenigstens eine Endkörper kann vorteilhafterweise Polyurethan, insbesondere Polyurethanschaum, wenigstens aufweisen. Vorteilhafterweise kann der wenigstens eine Endkörper wenigstens teilweise flexibel, insbesondere elastisch, sein.

Wenigstens eine Endkörper kann vorteilhafterweise fest mit wenigstens einem der Filterbälge verbunden sein.

Vorteilhafterweise kann der wenigstens eine Endkörper materialschlüssig und/oder kraftschlüssig und/oder formschlüssig, insbesondere mittels einer Klebeverbindung, Schweißverbindung, einer mechanischen Verbindung, insbesondere Steckverbindung, Klemmverbindung und/oder mittels Einknüpfen mit dem Filterbalg verbunden sein. Der wenigstens eine Endkörper kann auch an den wenigstens einen Filterbalg an- oder eingespritzt, gegossen oder geschäumt sein.

Die wenigstens eine Dichtung an der wenigstens einen Stirnseite kann eine Abdichtung zwischen dem Hohlfilterelement und dem Filtergehäuse realisieren.

Die wenigstens eine Dichtung kann insbesondere zur strömungsdichten Separierung einer Rohfluidseite von einer Reinfluidseite des Hohlfilterelements dienen. Sie kann Fehlfluidströme verhindern, welche einen Wirkungsgrad des Filters beeinträchtigen könnten.

Vorteilhafterweise kann die wenigstens eine Dichtung wenigstens einen Dichtring aufweisen. Der wenigstens eine Dichtungsabschnitt kann sich radial außen oder radial innen an dem wenigstens einen Dichtring befinden. Der wenigstens eine Dichtring, insbesondere derwenigstens eine Dichtabschnitt, kann vorteilhafterweise umfangsmäßig zusammenhängend sein. So kann er umfangsmäßig geschlossen abdichten.

Vorteilhafterweise kann die wenigstens eine Dichtung einstückig oder mehrstückig mit dem wenigstens einen Endkörper verbunden sein. Die wenigstens eine Dichtung kann vorteilhafterweise an den wenigstens einen Endkörper angespritzt oder eingespritzt oder als Zweikomponentenbauteil mit diesem realisiert sein.

Vorteilhafterweise kann die wenigstens eine Dichtung wenigstens teilweise flexibel, insbesondere elastisch, sein. Auf diese Weise kann eine Dichtwirkung verbessert werden. Ferner kann die wenigstens eine Dichtung einbaubedingte und/oder betriebsbedingte Toleranzen und/oder Schwingungen besser kompensieren.

Die wenigstens eine Dichtung kann vorteilhafterweise aus einem elastischen Material sein oder ein derartiges Material aufweisen. Vorteilhafterweise kann die wenigstens eine Dichtung Polyurethan oder einen andersartigen insbesondere elastischen Kunststoff aufweisen.

Vorteilhafterweise kann die wenigstens eine Dichtung wenigstens zwei Dichtungsabschnitte mit/aus gleichen Materialien und/oder gleichen Härten aufweisen. Alternativ kann die wenigstens eine Dichtung wenigstens zwei Dichtungsabschnitte mit/aus unterschiedlichen Materialien und/oder unterschiedlichen Härten aufweisen. Auf diese Weise kann eine Dichtwirkung und/ oder eine Stabilität der wenigstens einen Dichtung verbessert werden. Vorteilhafterweise kann die wenigstens eine Dichtung wenigstens in einem ersten Dichtungsabschnitt weicher sein als in einem zweiten Dichtungsabschnitt. Der wenigstens eine zweite Dichtungsabschnitt bezüglich der Elementachse axial näher an dem Filterbalg angeordnet sein als der wenigstens eine erste Dichtungsabschnitt. Vorteilhafterweise kann die wenigstens eine Dichtung im Bereich eines rohfluidseitigen, insbesondere rohluftseitigen, Dichtungsabschnitts härter sein als im Bereich eines reinfluidseitigen, insbesondere reinluftseitigen, Dichtungsabschnitts.

Vorteilhafterweise kann die wenigstens eine Dichtung wenigstens abschnittsweise mit wenigstens einem Stützabschnitt abgestützt werden. Vorteilhafterweise kann der wenigstens eine Stützabschnitt mit wenigstens einem Endkörper verbunden sein oder durch diesen wenigstens mit gebildet werden. Vorteilhafterweise kann der wenigstens eine Stützabschnitt die wenigstens eine Dichtung in einem im Vergleich zur restlichen Dichtung weichen Dichtungsabschnitt wenigstens abschnittsweise abstützen. Der wenigstens eine Stützabschnitt kann als Versteifung der wenigstens einen Dichtung wirken.

Die wenigstens eine Dichtung ist eine Radialdichtung oder weist eine Radialdichtung auf.

Vorteilhafterweise kann sich die wenigstens eine Dichtung außerhalb von Anströmflächen und Abströmflächen der durchströmbaren Filtermedien befinden. Sie kann sich vorteilhafterweise außerhalb der Filtermantelflächen des Hohlfilterelements befinden.

Vorteilhafterweise können die wenigstens zwei Filterbälge an wenigstens einer bezüglich einer Elementachse des wenigstens einen Mehrfachbalg-Hohlfilterelements axial vorderen oder hinteren Stirnseite mechanisch miteinander verbunden sein.

Vorteilhafterweise kann das Mehrfachbalg-Hohlfilterelement zumindest zwei radial ineinander gesetzte Filterbälge aufweisen. Zwischen den Filterbälgen kann wenigstens ein Elementinnenraum gebildet, insbesondere begrenzt, werden. Ein derartiges Mehrfachbalg-Hohlfilterelement kann als Doppelbalg-Filterelement bezeichnet werden. Die Filterbälge können jeweils entsprechend einem oben beschriebenen Hohlfilterelement ausgestaltet sein.

Jeder von zumindest zwei radial ineinander gesetzten Filterbälgen kann als Sternfilter mit sternförmig angeordneten, sich in radialer Richtung erstreckenden Filterfalten mit axial verlaufenden Stirnkanten ausgebildet sein. Die radial innen liegenden Stirnkanten der Falten des radial äußeren Filterbalgs sowie die radial außen liegenden Stirnkanten der Falten des radial innen liegenden Filterbalgs können jeweils den wenigstens einen Elementinnenraum, insbesondere Strömungsraum, begrenzen.

Bei einem Doppelbalg-Filterelement kann alternativ der radial innere Filterbalg auch aus wenigstens zwei offenen, insbesondere flachen und/oder ebenen, Filterbälgen oder Filterelementen, so genannten Flachfilterelementen, zusammengesetzt sein. Zusätzlich oder alternativ kann auch der radial äußere Filterbalg aus wenigstens zwei offenen, insbesondere flachen und/oder ebenen, Filterelementen zusammengesetzt sein.

Bei einem als Rundfilterelement ausgestalteten Doppelbalg-Filterelement können vorteilhafterweise die radial innere Umfangsseite des radial äußeren Filterbalgs und die radial äußere Umfangseite des radial inneren Filterbalgs parallel oder schräg zueinander, insbesondere konisch, verlaufen. Zwischen der radial äußeren Umfangsseite des radial inneren Filterbalgs und der radial inneren Umfangsseite des radial äußeren Filterbalgs kann ein radial äußerer Elementinnenraum, insbesondere ein abströmseitiger Elementinnenraum, realisiert sein. Innerhalb des radial inneren Filterbalgs kann ein radial innerer Elementinnenraum, insbesondere ein anströmseitiger Elementinnenraum, realisiert sein. Zur Filtrierung kann das Fluid von radial außen nach radial innen durch den radial äußeren Filterbalg zum radial äußeren Elementinnenraum gelangen. Der radial innere Elementinnenraum kann zu einer Stirnseite des Doppelbalg-Filterelements geschlossen sein und zur gegenüberliegenden Stirnseite, insbesondere einer anströmseitigen Stirnseite hin, offen sein. Ein Teil des anströmenden Fluids kann an der radial äußeren Umfangsseite des radial äußeren Filterbalgs insbesondere um 90 Grad abgelenkt werden. Der abgelenkte Teil des Fluids kann durch einen Fluidführungsbereich an der anströmseitigen oder rohfluidseitigen Stirnseite entlang zu einer Einströmöffnung strömen. Durch die Einströmöffnung an der anströmseitigen Stirnseite kann das Fluid in den radial inneren Elementinnenraum gelangen. Das Fluid kann den radial inneren Filterbalg von dem radial inneren Elementinnenraum zum radial äußeren Elementinnenraum durchströmen und von dort aus durch entsprechende Auslassöffnungen in der reinfluidseitige Stirnseite aus dem Doppelbalg-Filterelement herausgelangen.

Alternativ kann vorteilhafterweise das Hohlfilterelement einen einfachen Filterbalg aufweisen. Der Filterbalg kann wenigstens ein zur Filtrierung des Fluids durchströmbares Filtermedium aufweisen. Ein Elementinnenraum des Filterbalgs kann an einer Stirnseite insbesondere mit einem Endkörper verschlossen sein.

Bei einer weiteren vorteilhaften Ausführungsform kann eine Einbau-/Ausbauachse des Filters, zu der parallel, axial oder koaxial das Hohlfilterelement in das Filtergehäuse eingebaut und aus dem Filtergehäuse ausgebaut werden kann, axial, koaxial oder parallel zur Elementachse verlaufen. Auf diese Weise kann das Hohlfilterelement in einer axialen Richtung bezüglich der Elementachse in das Filtergehäuse oder aus diesem heraus gebracht werden. Das Hohlfilterelement kann in axialer Richtung bezüglich der Elementachse in dem Filtergehäuse gehalten, insbesondere eingespannt oder eingeklemmt, werden. Dabei kann eine radiale Kompression der wenigstens einen Dichtung verringert werden. Eine mechanische Belastung der wenigstens einen Dichtung kann so verringert werden. Ferner kann so die Gefahr verringert werden, dass sich die wenigstens eine Dichtung beim Einbau des Hohlfilterelements unerwünscht deformiert. Durch unerwünschte Deformation kann eine Dichtwirkung beeinträchtigt werden.

Bei einer weiteren vorteilhaften Ausführungsform kann wenigstens ein Endkörper wenigstens die entsprechende Stirnseite des Hohlfilterelements wenigstens teilweise verschließen. Auf diese Weise kann eine Fluidströmung durch die Stirnseite eingeschränkt oder verhindert werden. Mit dem wenigstens einen Endkörper kann so ein Strömungsverlauf in/an dem Hohlfilterelement mit vorgegeben werden.

Erfindungsgemäß weist die wenigstens eine Dichtung wenigstens zwei bezüglich der Elementachse zumindest axial zueinander beabstandete Dichtungsabschnitte auf. Auf diese Weise können mit der wenigstens einen Dichtung zwei voneinander axial beabstandete Dichtbereiche realisiert werden.

In Verbindung mit einer axialen Einbau-/Ausbauachse des Filters kann beim Einbau des Hohlfilterelements zunächst der in Einbaurichtung axial vordere Dichtungsabschnitt gegenüber einer entsprechenden Dichtfläche des Filtergehäuses abdichten. Anschließend kann das Hohlfilterelement insbesondere durch Montage eines Gehäusedeckels weiter in Einbaurichtung in das Filtergehäuse geschoben werden. Dabei kann wenigstens ein hinterer Dichtungsabschnitt mit der entsprechenden Dichtfläche des Filtergehäuses zusammenwirken. In der Endposition des Hohlfilterelements können alle Dichtungsabschnitte radial dichtend wirken.

Durch die Verwendung von wenigstens zwei Dichtungsabschnitten kann ferner eine Redundanz erzeugt werden. So können die Dichtwirkung und die Zuverlässigkeit der wenigstens einen Dichtung weiter verbessert werden.

Die wenigstens eine Dichtung weist eine Doppelradialdichtung auf oder ist eine Doppelradialdichtung. Bei der Doppelradialdichtung sind zwei parallele Dichtungsabschnitte jeweils bezüglich der Elementachse umfangsmäßig zusammenhängend geschlossen. Auf diese Weise kann eine Dichtwirkung weiter verbessert werden. Ferner kann eine gleichmäßige Abdichtung in Umfangsrichtung erfolgen.

Bei einer weiteren vorteilhaften Ausführungsform kann die wenigstens eine Dichtung wenigstens einen bezüglich der Elementachse radial äußeren Filterbalg und/oder wenigstens einen Endkörper wenigstens abschnittsweise radial überragen. Auf diese Weise kann die wenigstens eine Dichtung, insbesondere wenigstens eine Dichtabschnitt, radial außen am Hohlfilterelement angeordnet sein. Sie kann so die bezüglich der Elementachse breiteste Stelle des Hohlfilterelements definieren. So kann zwischen dem radial äußersten Bereich der wenigstens einen Dichtung und dem entsprechenden radial äußeren Filterbalg ein freier Raum definiert werden, welcher als Strömungsraum wirken kann.

Bei einer weiteren vorteilhaften Ausführungsform kann die wenigstens eine Dichtung wenigstens einen der Filterbälge und/oder wenigstens einen Endkörper bezüglich der Elementachse axial überragen. Auf diese Weise kann die wenigstens eine Dichtung ein axial äußerstes Ende des Hohlfilterelements definieren.

Vorteilhafterweise kann die wenigstens eine Dichtung, insbesondere ein freier Stirnrand der wenigstens einen Dichtung, in axialer Richtung als Anschlag des Hohlfilterelements dienen. Die wenigstens eine Dichtung kann in einer Endposition des Hohlfilterelements an einem entsprechenden Gehäusebereich anschlagen und so eine Bewegung axial zur Elementachse begrenzen. So kann das Hohlfilterelement genauer und stabiler im Filtergehäuse platziert werden.

Bei einer weiteren vorteilhaften Ausführungsform kann wenigstens ein Stützkörper, insbesondere ein Stützrahmen, vorgesehen sein wenigstens zur Unterstützung wenigstens eines Endkörpers und/oder der wenigstens einen Dichtung. Mit dem wenigstens einen Stützkörper kann eine Form des Hohlfilterelements vorgegeben und/oder stabilisiert werden. In seinem Einbauzustand kann das Hohlfilterelement mit dem wenigstens einen Stützkörper besser in dem Filtergehäuse abgestützt werden. Auf das Hohlfilterelement einwirkende Haltekräfte können so gleichmäßiger in das Hohlfilterelement eingeleitet und verteilt und aus diesem heraus geleitet werden.

Mit dem wenigstens einen Stützkörper kann wenigstens einer der Endkörper gestützt werden. Vorteilhafterweise kann eine Form eines flexiblen Endkörpers mit dem wenigstens einen Stützkörper stabilisiert werden.

Zusätzlich oder alternativ kann der wenigstens eine Stützkörper die wenigstens eine Dichtung unterstützen. Auf diese Weise können entsprechende radiale Dichtungskräfte besser in die wenigstens eine Dichtung eingeleitet und/oder von dieser weitergeleitet werden.

Vorteilhafterweise kann der wenigstens eine Stützkörper wenigstens teilweise in wenigstens einem Endkörper und/oder der wenigstens einen Dichtung eingebettet sein. Auf diese Weise kann eine stabilere Verbindung realisiert werden.

Der wenigstens eine Stützkörper kann vorteilhafterweise wenigstens einen gitterartigen Abschnitt aufweisen. Auf diese Weise kann er einfach mit dem Material des wenigstens einen Endkörpers und/oder der wenigstens einen Dichtung umgeben, insbesondere umspritzt oder umgossen, werden.

Vorteilhafterweise kann der wenigstens eine Stützkörper wenigstens einen Stützrahmen wenigstens aufweisen.

Vorteilhafterweise kann wenigstens der eine Stützkörper wenigstens einen bezüglich der Elementachse radial verlaufenden Abschnitt aufweisen. Der wenigstens eine radial verlaufende Abschnitt kann sich in und/oder an wenigstens einem Endkörper und/oder der wenigstens einen Dichtung erstrecken. Der wenigstens eine radial verlaufende Abschnitt kann vorteilhafterweise den wenigstens einen Endkörper und/oder die wenigstens eine Dichtung abstützen.

Vorteilhafterweise kann der wenigstens eine Stützkörper wenigstens einen bezüglich der Elementachse axial verlaufenden Abschnitt aufweisen. Der wenigstens eine axial verlaufende Abschnitt kann sich vorteilhafterweise zwischen den Stirnseiten des Filterelements erstrecken. Er kann die axiale Stabilität des Filterelements verbessern. Ferner kann der wenigstens eine axial verlaufende Abschnitt wenigstens eine Umfangsseite wenigstens eines der Filterbälge in die radialer Richtung abstützen.

Vorteilhafterweise kann der wenigstens eine Stützkörper, insbesondere ein Stützrahmen, einstückig realisiert sein.

Der wenigstens eine Stützkörper kann vorteilhafterweise wenigstens teilweise aus Kunststoff insbesondere gegossen oder gespritzt sein.

Vorteilhafterweise können insbesondere mit dem wenigstens einen axialen Abschnitt des wenigstens einen Stützkörpers axiale Kräfte, welche beim Zusammenpressen des Hohlfilterelements in dem Filtergehäuse entstehen können, eingeleitet werden.

Vorteilhafterweise kann ein hohler, insbesondere rohrförmiger Stützkörper wenigstens eine Stützstreben aufweisen. Wenigstens eine Stützstrebe kann sich vorteilhafterweise im Bereich eines Endes der Stützkörpers befinden. Wenigstens eine Stützstreben kann vorteilhafterweise im Bereich des Endes angeordnet sein, welches der auslassseitigen Stirnseite des Hohlfilterelements zugewandt ist. Wenigstens eine Stützstrebe kann sich vorteilhafterweise quer, insbesondere senkrecht, zur Elementachse erstrecken. Bei einem Endkörper mit einem ovalen Querschnitt kann sich wenigstens eine Stützstrebe In Richtung der kurzen Querachse des ovalen Stützkörpers und quer, insbesondere senkrecht, zur Elementachse erstrecken. Wenigstens eine Stützstrebe kann sich quer durch den Elementinnenraum wenigstens eines Filterbalgs erstreckt. Wenigstens eine Stützstrebe kann dem Abstützen der Seiten des Filterbalgs, bei einem ovalen Filterbalg der langen flachen Seiten des Filterbalgs, dienen.

Bei einer weiteren vorteilhaften Ausführungsform kann die wenigstens eine Dichtung wenigstens eine Aufnahme, insbesondere einen Aufnahmeraum, für wenigstens einen Abschnitt wenigstens eines Sekundärfilterelementes des Filters wenigstens mit bilden. Mittels der wenigstens einen Aufnahme kann das wenigstens eine Sekundärfilterelement einfacher und/oder platzsparender im Filtergehäuse angeordnet werden. Ferner kann das Sekundärfilterelement mithilfe der wenigstens einen Aufnahme einfacher relativ zu dem Hohlfilterelement platziert werden.

Bei dem Sekundärfilterelement kann es sich vorteilhafterweise um ein so genanntes Flachfilterelement handeln. Bei einem Flachfilterelement umgibt das Filtermedium im Unterschied zu einem Hohlfilterelement keinen Elementinnenraum. Das Flachfilterelement kann dabei eben oder gebogen sein.

Das Filtergehäuse weist wenigstens eine Dichtfläche auf, mit der die wenigstens eine Dichtung mit wenigstens einem wenigstens teilumfänglichen radial äußeren und/ oder radial inneren Dichtungsabschnitt bezüglich der Elementachse radial dichtend zusammenwirken kann.

Vorteilhafterweise kann die Elementachse koaxial, axial oder parallel zu einer Einbau-/ Ausbauachse des wenigstens einen Hohlfilterelements verläuft, zu der parallel, axial oder koaxial das Hohlfilterelement durch die wenigstens eine Einbauöffnung in das Filtergehäuse eingebaut und aus dem Filtergehäuse ausgebaut werden kann.

Die Elementachse und die Einbau-/Ausbauachse können im Montagezustand zumindest parallel verlaufen. Auf diese Weise kann das wenigstens eine Hohlfilterelement einfach axial zur Elementachse in das wenigstens eine erste Gehäuseteil eingebaut werden. Auf ein Verkippen oder Verdrehen des wenigstens einen Hohlfilterelements beim Einbau oder Ausbau kann so verzichtet werden. Durch die axiale Anordnung des Hohlfilterelements kann darüber hinaus der zweite Gehäuseteil, insbesondere ein Gehäusedeckel, einfach axial zur Einbau-/Ausbauachse auf oder in die wenigstens eine Einbauöffnung zum Verschließen derselben montiert werden.

Vorteilhafterweise kann die Einbau-/Ausbauachse parallel, axial oder koaxial zu einer Gehäuseachse des Filtergehäuses sein. Vorteilhafterweise kann die Elementachse während des gesamten Einbauvorgangs oder Ausbauvorgangs, zumindest ab dem Eintritt in das Filtergehäuse, insbesondere in eine Einbauöffnung, parallel, axial oder koaxial zur Gehäuseachse sein.

Vorteilhafterweise kann das wenigstens eine Hohlfilterelement derart in dem Filtergehäuse relativ zu dem wenigstens einen Einlass und dem wenigstens einen Auslass angeordnet sein, dass wenigstens einer der Filterbälge anströmseitig und/oder abströmseitig bezüglich der Elementachse von radial innen nach radial außen oder von radial außen nach radial innen durchströmt werden kann.

Vorteilhafterweise kann der Filter wenigstens einen Vorfilter aufweisen. Der Vorfilter kann wenigstens einen Partikelabscheider, insbesondere einen Zyklonabscheider, aufweisen. Mit dem wenigstens einen Partikelabscheider können Partikel, insbesondere Staub, aus dem zuströmenden Fluid, insbesondere Luft, ausgetragen werden. So kann die Schmutzmenge, die zu dem Hohlfilterelement gelangt, verringert werden. Auf diese Weise kann die Standzeit des Hohlfilterelements verlängert werden.

Vorteilhafterweise kann der wenigstens eine Vorfilter wenigstens einen Zyklonblock mit einer Mehrzahl von Zyklonabscheidern aufweisen. So kann die Abscheideeffizienz und/oder die Durchlasskapazität an Fluid verbessert werden.

Vorteilhafterweise kann der Filter, insbesondere wenigstens eine Vorfilter und/oder ein Partikelabscheider, wenigstens eine Leitgeometrie aufweisen. Mit der wenigstens einen Leitgeometrie kann eine Fluidströmung im Filter beeinflusst werden. Mit der wenigstens einen Leitgeometrie kann beim Betrieb des Filters ein Unterdruck weiter beruhigt, insbesondere vergleichmäßigt, werden.

Insgesamt kann der Strömungsverlauf in dem Filter mit dem wenigstens einen Vorfilter etwa Z-förmig sein. Auf diese Weise kann der Filter platzsparend an den zur Verfügung stehenden Bauraum angepasst sein.

Der wenigstens eine Vorfilter kann vorteilhafterweise mittels einer flexiblen, insbesondere elastischen, Verbindung, insbesondere einem Schlauch oder Faltenbalg, mit einem Hauptfilter, der das wenigstens eine Hohlfilterelement enthält, verbunden sein. Auf diese Weise können Einbautoleranzen und/oder betriebsbedingte Schwingungen besser kompensiert werden. Die flexible Verbindung kann aus einem Kunststoff, insbesondere einem Elastomer oder Gummi, sein.

Vorteilhafterweise kann das wenigstens eine zweite Gehäuseteil wenigstens im Endmontagezustand des Filters eine wenigstens axial zur Elementachse wirkende Kraft auf das wenigstens eine Hohlfilterelement ausüben.

So kann das wenigstens eine Hohlfilterelement unter Zuhilfenahme des zweiten Gehäuseteils in axialer Richtung in dem Filtergehäuse positioniert und/oder verpresst oder eingeklemmt werden. Insbesondere in Kombination mit wenigstens einer bezüglich der Elementachse zumindest in radialer Richtung wirkenden Dichtung kann so eine Abdichtung zwischen der Reinfluidseite und der Rohfluidseite verbessert werden. Ferner können so die Haltefunktion und die Dichtungsfunktion unabhängig voneinander jeweils verbessert werden.

Durch Kombination einer radialen Anströmung oder Abströmung mit der axialen Verpressung oder Verspannung kann das Verhältnis zwischen benötigtem Einbauraum und Filtereffizienz verbessert werden. Insbesondere bei Verwendung eines Doppelbalg-Hohlfilterelements kann so der Filter in Bezug auf Effizienz und Platzbedarf verbessert werden.

Vorteilhafterweise kann die Kraft von dem wenigstens einen zweiten Gehäuseteil an wenigstens einer Stütznoppe und/oder wenigstens einem Stützrahmen und/oder wenigstens einem Endkörper und/oder wenigstens einer Dichtung des wenigstens einen Hohlfilterelements angreifen. Auf diese Weise kann die Axialkraft gleichmäßig zwischen dem wenigstens einen Hohlfilterelement, dem ersten Gehäuseteil und dem zweiten Gehäuseteil übertragen werden. Das wenigstens eine Hohlfilterelement kann so stabil und präzise in dem Filtergehäuse gehalten werden.

Bei dem axial zwischen dem ersten Gehäuseteil und dem zweiten Gehäuseteil eingespannten Hohlfilterelement kann die Kraftführung durch das zweite Gehäuseteil über die wenigstens eine Stütznoppe, den wenigstens einen Stützrahmen, den wenigstens einen Endkörper und die wenigstens eine Dichtung auf das erste Gehäuseteil erfolgten.

Vorteilhafterweise kann das wenigstens eine Hohlfilterelement wenigstens ein Distanzelement, insbesondere wenigstens eine Stütznoppe und/oder wenigstens einen Stützsteg, aufweisen. So kann die Außenseite des Hohlfilterelements insbesondere im Bereich einer Einströmöffnung oder einer Ausströmöffnung in einem Abstand zu einer entsprechenden Innenseite des Filtergehäuses gehalten werden. Auf diese Weise kann mit dem wenigstens einen Distanzelement ein Strömungsbereich zwischen dem wenigstens einen Hohlfilterelement und dem Filtergehäuse vorgegeben werden, durch den Fluid strömen kann.

Vorteilhafterweise kann das wenigstens eine Distanzelement an wenigstens einem Endkörper angeordnet sein. Das wenigstens eine Distanzelement kann wenigstens einen Stücksteg und/oder wenigstens eine Stütznoppe aufweisen.

Das wenigstens eine Distanzelement kann vorteilhafterweise insbesondere einstückig mit dem wenigstens einen Endkörper verbunden sein. Auf diese Weise kann es gemeinsam mit diesem hergestellt und/oder verbaut werden.

Das wenigstens eine Distanzelement kann ermöglichen, dass das Hohlfilterelement, insbesondere das Doppelbalgelement, bezüglich der Elementachse radial und axial angeströmt werden kann. An einer rohfluidseitigen Stirnseite kann mit dem wenigstens einen Distanzelement ein Strömungskanal oder Strömungsraum definiert sein. Durch den Strömungskanal kann das zunächst bezüglich der Elementachse radial anströmende Fluid nach einer Umlenkung an der radial äußeren Umfangsseite des wenigstens einen Hohlfilterelements durch eine entsprechende Einströmöffnung an der rohfluidseitigen Stirnseite des Hohlfilterelements axial in einen radial inneren Elementinnenraum gelangen. Von dort aus kann das Fluid durch einen entsprechenden radial inneren Filterbalg von radial innen nach radial außen strömen und in einem zweiten, abströmseitigen Elementinnenraum gelangen. Der zweite, abströmseitige Elementinnenraum kann sich vorteilhafterweise radial zwischen dem radial äußeren Filterbalg und dem radial inneren Filterbalg befinden.

Vorteilhafterweise kann das wenigstens eine Hohlfilterelement wenigstens eine Dichtung aufweisen, die bezüglich der Elementachse wenigstens teilweise umfangsmäßig im Bereich wenigstens einer der Stirnseiten des Hohlfilterelements angeordnet sein kann. Die wenigstens eine Dichtung kann so angeordnet und ausgestaltet sein, dass sie eine Rohfluidseite von einer Reinfluidseite trennen kann.

Die wenigstens eine Dichtung wirkt mit wenigstens einer entsprechenden Dichtfläche eines Filtergehäuses des Filters bezüglich der Elementachse radial dichtend zusammen. Auf diese Weise können zur Dichtwirkung beitragende Dichtkräfte in radialer Richtung wirken und zum Halten des Filterelements im Filtergehäuse beitragende Haltekräfte in axialer Richtung wirken. Die Dichtungsfunktion kann so besser von der Haltefunktion getrennt werden.

Vorteilhafterweise kann das wenigstens eine Hohlfilterelement wenigstens einen Endkörper an einer bezüglich einer Elementachse axialen Stirnseite aufweisen. Mit dem wenigstens einen Endkörper kann das wenigstens eine Hohlfilterelement an einer entsprechenden Stirnseite besser abgestützt werden. Insbesondere kann eine bezüglich der Elementachse axiale Abstützung verbessert werden.

Ferner kann der wenigstens eine Endkörper so ausgestaltet sein, dass er das wenigstens eine Hohlfilterelement an der entsprechenden Stirnseite wenigstens teilweise verschließen kann. Auf diese Weise kann mit den wenigstens einen Endkörper ein Strömungsverlauf in das wenigstens eine Hohlfilterelement und aus diesem heraus beeinflusst werden.

Der wenigstens eine Endkörper kann vorteilhafterweise wenigstens eine Endscheibe wenigstens aufweisen oder als eine derartige ausgestaltet sein.

Vorteilhafterweise kann der wenigstens eine Filter wenigstens ein Sekundärfilterelement aufweisen.

Vorteilhafterweise kann das wenigstens eine Sekundärfilterelement stromabwärts des wenigstens einen Hohlfilterelements, also reinfluidseitig, angeordnet sein. Mit dem wenigstens einen Sekundärfilterelement können Partikel, welche durch das wenigstens eine Hohlfilterelement nicht erfasst wurden, aus dem Fluidstrom herausgefiltert werden.

Vorteilhafterweise kann das wenigstens eine Sekundärfilterelement eine feinere Filtrierung, insbesondere kleinere Porengrößen, als das wenigstens eine Hohlfilterelement aufweisen. Auf diese Weise können auch kleinere Partikel mit dem wenigstens einen Sekundärfilterelement herausgefiltert werden, als dies mit dem Hohlfilterelement möglich ist.

Bei dem wenigstens einen Sekundärfilterelement kann es sich um ein Flachfilterelement handeln.

Das wenigstens eine Sekundärfilterelement kann vorteilhafterweise wenigstens teilweise in wenigstens einer Aufnahme des wenigstens einen Hohlfilterelements platzsparend angeordnet sein. Die wenigstens eine Aufnahme für das wenigstens eine Sekundärfilterelement kann vorteilhafterweise mit der wenigstens einen Dichtung wenigstens mitgebildet und/oder von dieser wenigstens teilweise umgeben sein.

Der Filter kann vorteilhafterweise als Luftfilter ausgestaltet sein. Der Luftfilter kann vorteilhafterweise Teil eines Luftansaugtrakts einer Brennkraftmaschine sein. Er kann zur Reinigung von Verbrennungsluft dienen, welche der Brennkraftmaschine zugeführt wird. Die Erfindung ist jedoch nicht beschränkt auf einen Luftfilter eines Luftansaugtrakts einer Brennkraftmaschine eines Kraftfahrzeugs. Vielmehr kann sie auch bei andersartigen Luftsystemen von Kraftfahrzeugen verwendet werden. Bei dem Luftfilter kann es sich auch um einen Innenraumfilter handeln. Der Luftfilter kann auch außerhalb der Kraftfahrzeugtechnik, insbesondere bei Industriemotoren, eingesetzt werden.

Vorteilhafterweise kann der erfindungsgemäße Filter in Verbindung mit einem landwirtschaftlichen Kraftfahrzeug und/oder einer landwirtschaftlichen Maschine verwendet werden. Die Erfindung ist jedoch nicht beschränkt darauf. Sie kann auch bei andersartigen Kraftfahrzeugen, insbesondere Personenkraftwagen, Lastkraftwagen, anderen Nutzfahrzeugen oder Maschinen, insbesondere Baufahrzeugen oder Baumaschinen, verwendet werden.

Die Erfindung kann statt zur Filtrierung von Luft auch zur Filtrierung von andersartigen Fluiden, insbesondere Wasser, Kraftstoff, Öl oder Harnstoff/Wasser-Lösung, verwendet werden.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch:
- Figur 1: einen ersten längsseitigen Längsschnitt eines ersten Ausführungsbeispiels eines Luftfilters einer Brennkraftmaschine eines Traktors mit einem Vorfilter und einem Hauptfilter;
- Figur 2: eine Detailansicht des Hauptfilters aus Figur 1;
- Figur 3: eine vergrößerte Ansicht des Hauptfilters aus Figur 2 im Bereich einer Doppelradialdichtung eines Hauptfilterelements;
- Figur 4: einen querseitigen Längsschnitt des Hauptfilters aus den Figuren 1 bis 3;
- Figur 5: eine isometrische Darstellung des Hauptfilterelements des Hauptfilters aus den Figuren 1 bis 4 mit Sicht auf eine abströmseitige Stirnseite;
- Figur 6: eine isometrische Darstellung des Hauptfilterelements aus Figur 5 mit Sicht auf eine anströmseitige Stirnseite;
- Figur 7: einen zweiten längsseitigen Längsschnitt des Luftfilters aus Figur 1, wobei der Blickwinkel gegenüber der Darstellung aus Figur 1 um 180 Grad gedreht ist;
- Figur 8: eine Detailansicht des Hauptfilters des Luftfilters aus Figur 7;
- Figur 9: einen längsseitigen Längsschnitt eines zweiten Ausführungsbeispiels eines Luftfilters einer Brennkraftmaschine;
- Figur 10: einen querseitigen Längsschnitt eines Hauptfilters des Luftfilters aus Figur 9;
- Figur 11: eine isometrische Darstellung eines Hauptfilterelements des Hauptfilters aus den Figuren 9 und 10 mit Sicht auf eine abströmseitige Stirnseite;
- Figur 12: eine isometrische Darstellung des Hauptfilterelements aus Figur 11 mit Sicht auf eine anströmseitige Stirnseite;
- Figur 13: eine vergrößerte Ansicht des Hauptfilters des Luftfilters aus Figur 9 im Bereich einer Doppelradialdichtung des Hauptfilterelements;
- Figur 14: eine Ansicht des Luftfilters aus Figur 9 mit Blick auf die Einlassseite;
- Figur 15: eine Detailansicht eines offenen Gehäuses eines Vorfilters des Luftfilters aus Figur 9.

In den Figuren sind gleiche Bauteile mit gleichen Bezugszeichen versehen.

### Ausführungsform(en) der Erfindung

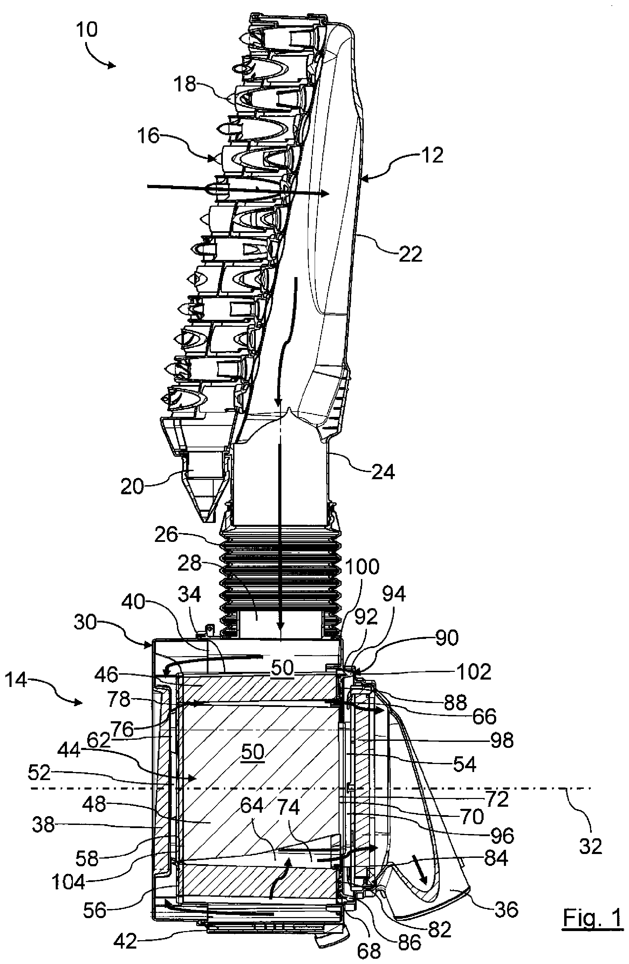

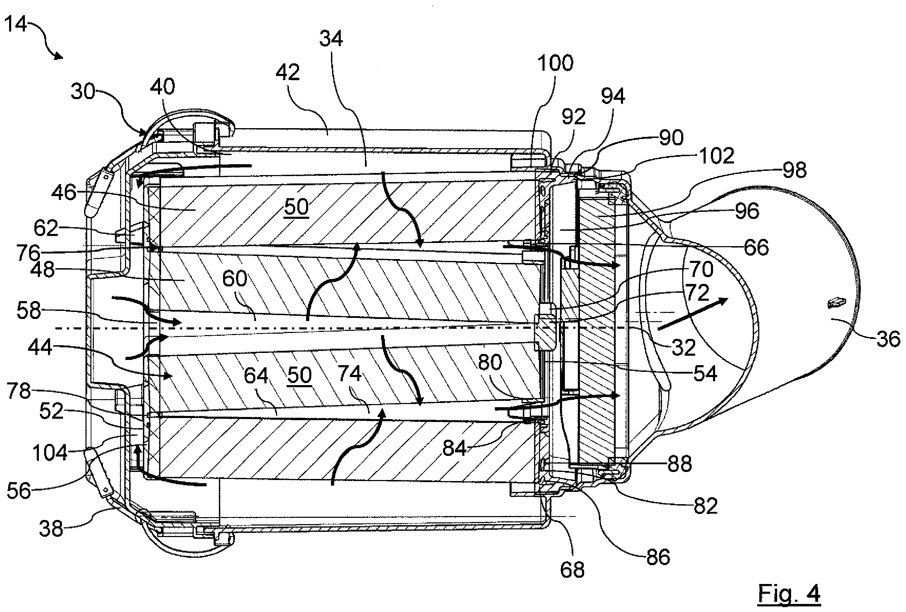

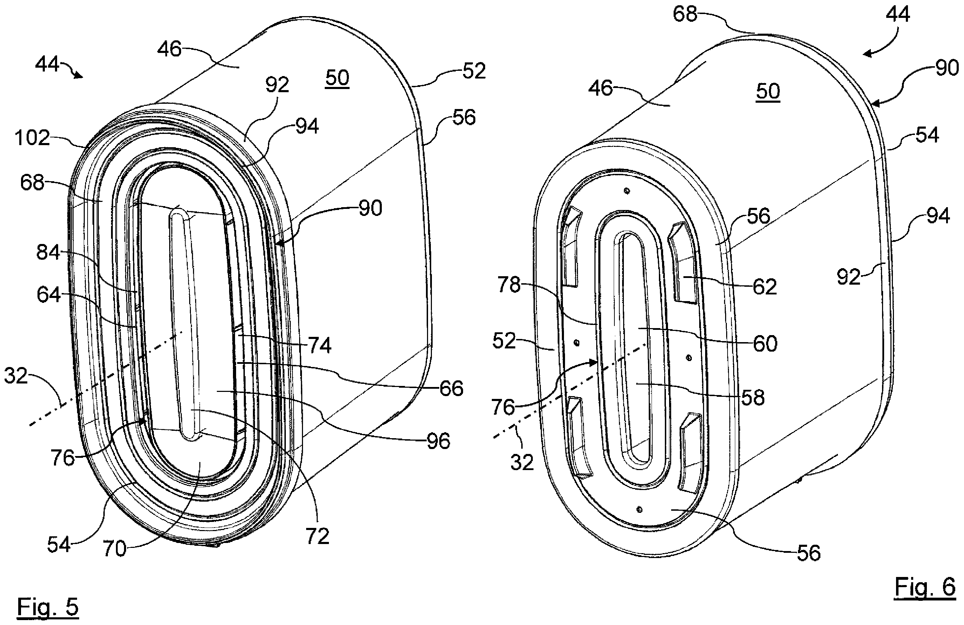

In Figuren 1 bis 8 ist ein Luftfilter 10 einer Brennkraftmaschine eines Traktors in unterschiedlichen Schnitten, Detailansichten und Perspektiven gezeigt. Der Luftfilter 10 kann beispielhaft in der Nähe einer A-Säule des Traktors angeordnet sein. Mit dem Luftfilter 10 wird Verbrennungsluft, die der Brennkraftmaschine zur Verbrennung zugeführt wird, gereinigt und filtriert.

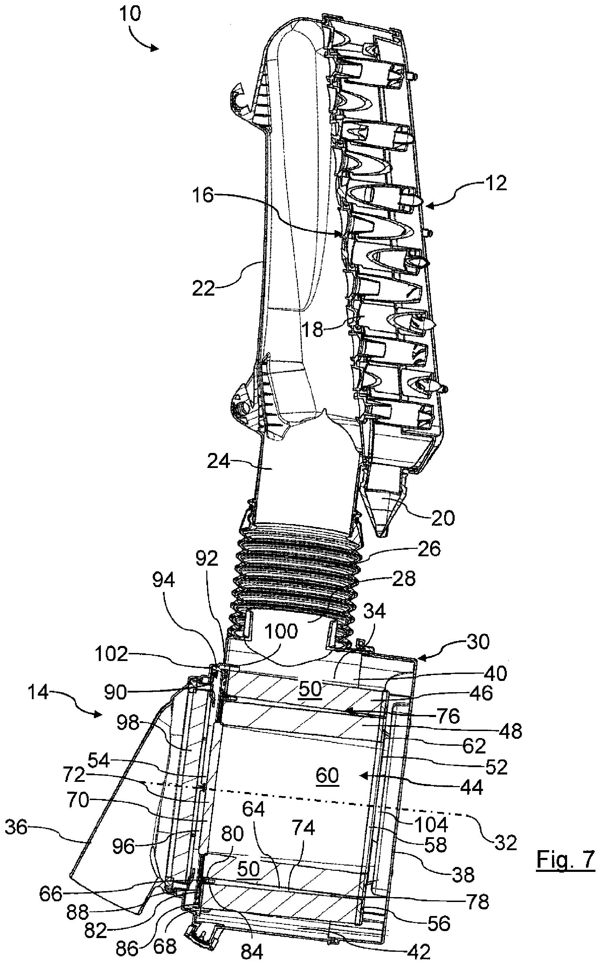

Der Luftfilter 10 umfasst in Strömungsrichtung der angesaugten Luft hintereinander angeordnet einen Vorfilter 12, in den Figuren 1 und 7 oben, und einen Hauptfilter 14, in den Figuren 1 und 7 unten.

Der Vorfilter 12 weist einlassseitig eine Zyklonbox 16 auf, welche eine Mehrzahl von Zyklonabscheidern 18 umfasst. Die Zyklonabscheider 18 werden eingangsseitig von der angesaugten Luft durchströmt. Mit den Zyklonabscheidern 18 werden größere Partikel, beispielsweise Staub, aus der angesaugten Luft ausgetragen. Die ausgetragenen Partikel können über eine Austragöffnung 20, welche sich an einer Unterseite des Vorfilters 12 befindet, aus dem Luftfilter 10 entfernt werden. Die Austragöffnung 20 ist während des Betriebs geschlossen.

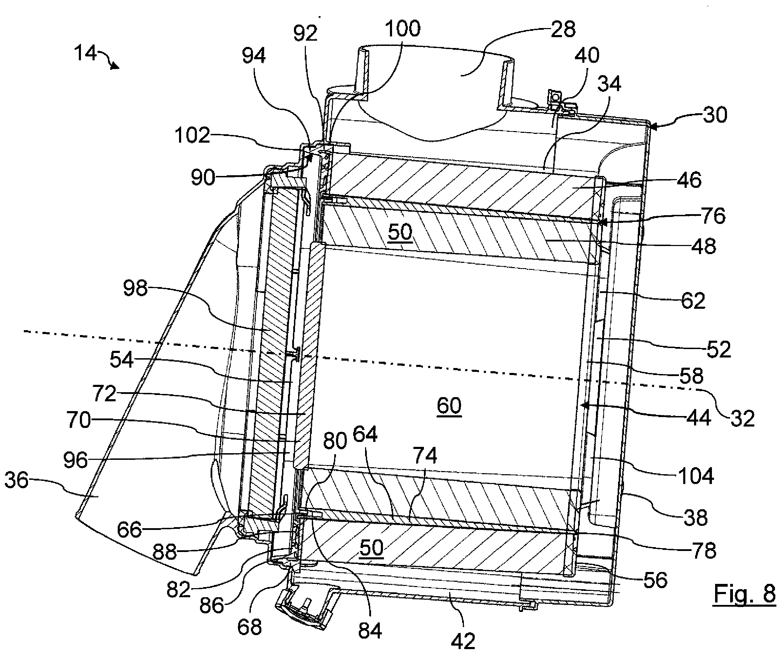

Ein Vorfiltergehäuse 22 des Vorfilters 12 weist unten einen Vorfilterauslassstutzen 24 auf, welcher mittels eines elastischen balgartigen Verbindungsschlauchs 26 mit einem Einlassstutzen 28 eines Hauptfiltergehäuses 30 des Hauptfilters 14 verbunden ist. Der Einlassstutzen 28 führt bezüglich einer in den Figuren 1 und 8 horizontalen Achse 32 des Hauptfilters 14 umfangsseitig, seitlich in das Hauptfiltergehäuse 30.

Wenn im Folgenden von "radial", "axial", "koaxial", "umfangsmäßig" oder dergleichen die Rede ist, so bezieht sich dies, sofern nicht anders erwähnt, auf die Achse 32.

Ein Gehäuseinnenraum 34 des Hauptfiltergehäuses 30 ist etwa koaxial zur Achse 32. Es hat einen ovalen, an seinen langen Seiten abgeflachten Querschnitt. An einer Stirnseite führt ein Auslassstutzen 36 schräg zur Achse 32 aus dem Hauptfiltergehäuse 30 heraus. Der Auslassstutzen 36 ist mit entsprechenden, in den Figuren nicht gezeigten, Verbindungsschläuchen oder Rohren mit der Brennkraftmaschine verbunden. Durch den Auslassstutzen 36 wird die mit dem Luftfilter 10 gereinigte Luft der Brennkraftmaschine zugeführt. Die Stirnseite mit dem Auslassstutzen 36 befindet sich bezüglich einer zur Achse 32 senkrechten Ebene auf der der Zyklonbox 16 gegenüberliegenden Seite.

Auf der axial gegenüberliegenden Stirnseite des Hauptfiltergehäuses 30 ist ein Gehäusedeckel 38 entfernbar angebracht. Der Gehäusedeckel 38 verschließt eine koaxiale Einbauöffnung 40 eines Gehäusetopfs 42 des Hauptfiltergehäuses 30. Der Gehäusetopf 42 beinhaltet den größten Teil des Gehäuseinnenraums 34.

Durch die Einbauöffnung 40 kann ein Hauptfilterelement 44 des Luftfilters 10 in Richtung einer Einbau-/Ausbauachse in den Gehäusetopf 42 eingesteckt und aus diesem herausgezogen werden. Das Hauptfilterelement 44 ist in dem Gehäuseinnenraum 34 so angeordnet, dass es den Einlassstutzen 28 von dem Auslassstutzen 36 trennt.

Die Einbau-/Ausbauachse, eine Elementachse des Hauptfilterelements 44 und eine Gehäuseachse des Hauptfiltergehäuses 30 fallen in dem gezeigten Ausführungsbeispiel mit der Achse 32 zusammen und sind der besseren Übersichtlichkeit wegen mit dem gleichen Bezugszeichen versehen. Wenn im Folgenden von der Achse 32 die Rede ist, so bezieht sich dies je nach Zusammenhang, auf die entsprechende Achse.

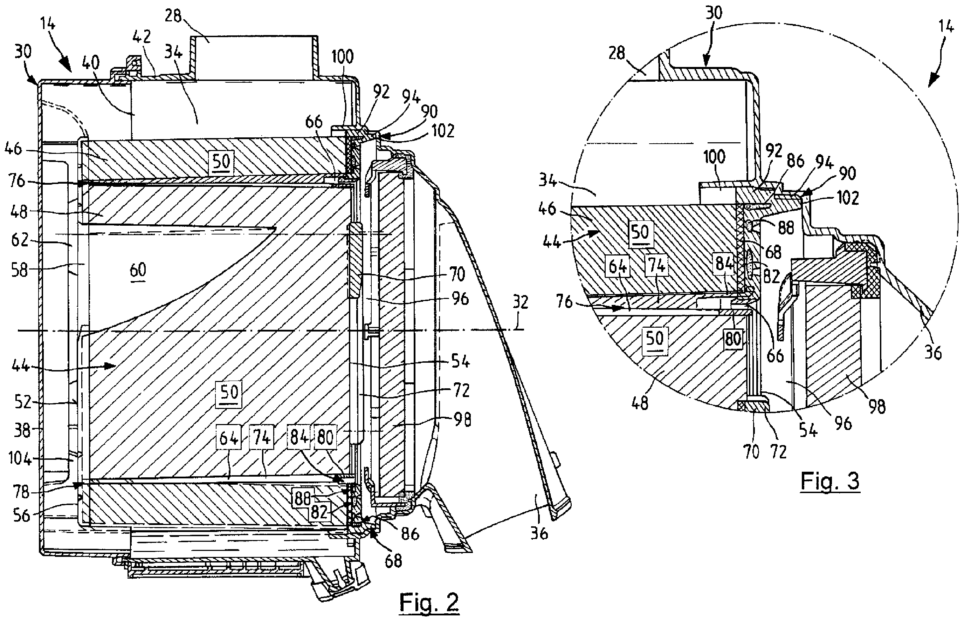

Der Hauptfilter 14 mit dem Hauptfilterelement 44 wird im Folgenden anhand der Detailansichten aus den Figuren 2 bis 6 und 8 beschrieben. Das Hauptfilterelement 44 ist als sogenanntes flach-ovales Doppelbalg-Rundfilterelement ausgestaltet. Das Hauptfilterelement 44 umfasst einen bezüglich der Elementachse radial äußeren Filterbalg 46 und einen radial inneren Filterbalg 48. Die Filterbälge 46 und 48 weisen jeweils ein Filtermedium 50 in Form eines Filterpapiers auf, welches zickzackförmig gefaltet und umfangsmäßig geschlossen ist. Die Faltkanten der Filterbälge 46 und 48 erstrecken sich dabei leicht schräg zur Elementachse zwischen den beiden Stirnseiten des Hauptfilterelements 44.

Die Filterbälge 46 und 48 sind bezüglich der Achse 32 etwa konisch verlaufend, wobei die Spitzen der Kegel entgegengerichtet sind. Der radial innere Filterbalg 48 verjüngt sich von der einlassseitigen, rohluftseitigen Stirnseite 52 des Hauptfilterelements 44 zur auslassseitigen, reinluftseitigen Stirnseite 54 hin. Der radial äußere Filterbalg 46 verjüngt sich von der auslassseitigen Stirnseite 54 zur einlassseitigen Stirnseite 52 hin.

Auf der einlassseitigen Stirnseite 52 sind die Stirnseiten der Filterbälge 46 und 48 mittels einer einlassseitigen Endscheibe 56 miteinander verbunden. Die einlassseitige Endscheibe 56 ist aus elastischem Polyurethan auf die entsprechenden Stirnseiten der Filterbälge 46 und 48 geschäumt. Ein radial äußerer Ringbereich der einlassseitigen Endscheibe 56 überlappt die Stirnseiten der Filterbälge 46 und 48 geschlossen. In ihrem Zentrum weist die einlassseitige Endscheibe 56 eine koaxiale Einlassöffnung 58 auf, welche zu einem radial inneren Elementinnenraum 60 führt. Der radial innere Elementinnenraum 60 ist von dem radial inneren Filterbalg 48 umgeben.

An der den Filterbälgen 46 und 48 axial abgewandten Außenseite weist die einlassseitige Endscheibe 56 insgesamt vier längliche Distanzstege 62 auf. Die Distanzstege 62 befinden sich gleichmäßig verteilt jeweils im Bereich von Übergängen von den langen Seiten der flach-ovalen einlassseitigen Endscheibe 56 zu deren kurzen Seiten. Radial betrachtet befinden die Distanzstege 62 sich etwa auf Höhe der Grenze zwischen dem radial äußeren Filterbalg 46 und dem radial inneren Filterbalg 48. Die Distanzstege 62 erstrecken sich jeweils entsprechend gebogen etwa umfangsmäßig und in axialer Richtung. Sie sind einstückig mit der einlassseitigen Endscheibe 56 verbunden.

Zwischen der radial äußeren Umfangsseite des radial inneren Filterbalgs 48 und der radial inneren Umfangsseite des radial äußeren Filterbalgs 46 erstreckt sich ein radial äußerer Elementinnenraum 64. Der radial äußere Elementinnenraum 64 hat etwa die Form eines flach-ovalen, koaxialen Ringraums. Ein Querschnitt des radial äußeren Elementinnenraums 64 verjüngt sich zur einlassseitigen Stirnseite 52 hin etwa keilförmig. Der radial äußere Elementinnenraum 64 öffnet sich an der auslassseitigen Stirnseite 54 mit einer Auslassöffnung 66 für die gereinigte Luft. Die Auslassöffnung 66 hat die Form eines koaxialen, im Querschnitt flach-ovalen Rings.

An der auslassseitigen Stirnseite 54 ist die entsprechende Stirnseite des radial äußeren Filterbalgs 46 mit einer radial äußeren auslassseitigen Endscheibe 68 dicht verbunden. Die entsprechende Stirnseite des radial inneren Filterbalgs 48 ist mit einer radial inneren auslassseitigen Endscheibe 70 dicht verbunden. Die auslassseitigen Endscheiben 68 und 70 sind analog zu der einlassseitigen Endscheibe 56 aus Polyurethan an die Stirnseiten der Filterbälge 46 und 48 geschäumt.

Die auslassseitigen Endscheiben 68 und 70 lassen die Auslassöffnung 66 frei, so dass gereinigte Luft aus dem radial äußeren Elementinnenraum 64 auf der auslassseitigen Stirnseite 54 aus dem Hauptfilterelement 44 herausströmen kann.

Die radial innere auslassseitige Endscheibe 70 hat eine etwa flach-ovale Form und ist geschlossen. Sie verschließt den radial inneren Elementinnenraum 60 zur auslassseitigen Stirnseite 54 hin.

An der dem radial inneren Elementinnenraum 60 axial abgewandten Außenseite weist die radial innere auslassseitige Endscheibe 70 einen zentralen, auslassseitigen Stützsteg 72 auf. Der Stützsteg 72 erstreckt sich entsprechend dem Profil des radial inneren Elementinnenraums 60 beidseitig radial zur Achse 32 und axial. Die radial äußere auslassseitige Endscheibe 68 wird weiter unten näher erläutert.

In dem radial äußeren Elementinnenraum 64 erstreckt sich eine Mehrzahl von Axialrahmenabschnitten 74 eines Stützrahmens 76 zwischen der einlassseitigen Stirnseite 52 und der auslassseitigen Stirnseite 54.

Auf der einlassseitigen Stirnseite 52 sind die Enden der Axialrahmenabschnitte 74 jeweils mit einem einlassseitigen Umfangsrahmenabschnitt 78 einstückig verbunden. Der einlassseitige Umfangsrahmenabschnitt 78 ist koaxial zur Achse 32 und erstreckt sich radial zwischen den einlassseitigen Stirnseiten des radial äußeren Filterbalgs 46 und des radial inneren Filterbalgs 48. Der einlassseitige Umfangsrahmenabschnitt 78 ist in die einlassseitige Endscheibe 46 eingebettet. Er weist umfangsmäßig verteilt eine Mehrzahl von Durchtrittsöffnungen auf, durch die das Polyurethan beim Einschäumen zur Realisierung der Endscheibe 56 fließen kann.

Die radiale Breite der Axialrahmenabschnitte 74 vergrößert sich in axialer Richtung betrachtet zu der auslassseitigen Stirnseite 54 hin. Die Axialrahmenabschnitte 74 sind bezüglich ihrer radialen Breite an den Verlauf der radialen Ausdehnung des radial äußeren Elementinnenraums 64 angepasst.

An der auslassseitigen Stirnseite 54 sind die Enden der Axialrahmenabschnitte 74 an ihrer radial inneren Seite mit einem radial inneren auslassseitigen Umfangsrahmenabschnitt 80 einstückig verbunden. Der radial innere auslassseitige Umfangsrahmenabschnitt 80 hat etwa die Form eines flach-ovalen, koaxialen Hohlzylinders. Er ist an der radial äußeren Umfangsseite des radial inneren Filterbalgs 48 angeordnet. Er ist in die radial innere auslassseitige Endscheibe 70 eingebettet.

An ihrer radial äußeren Seite sind die auslassseitigen Enden der Axialrahmenabschnitte 74 jeweils mit einem Mantelabschnitt 84 eines radial äußeren auslassseitigen Umfangsrahmenabschnitts 82 einstückig verbunden. Der Mantelabschnitt 84 hat etwa die Form eines flach-ovalen, koaxialen Hohlzylinders. Er erstreckt sich an der radial inneren Umfangsseite des radial äußeren Filterbalgs 46.

Ein Dichtungsstützabschnitt 86 des radial äußeren auslassseitigen Umfangsrahmenabschnitts 82 hat etwa die Form eines flach-ovalen Hohlzylinders. Er erstreckt sich umfangsmäßig und koaxial in axialer Verlängerung zur radial äußeren Umfangsseite des radial äußeren Filterbalgs 46 von der auslassseitigen Stirnseite des Filterbalgs 46 weg. Der Dichtungsstützabschnitt 86 weist eine Vielzahl von Durchtrittslöchern auf, durch die beim Einbetten des radial äußeren auslassseitigen Umfangsrahmenabschnitts 82 in die radial äußere auslassseitige Endscheibe 68 das Polyurethan fließen kann.

Der Dichtungsstützabschnitt 86 ist mittels einer Mehrzahl von Verbindungsabschnitten 88 einstückig mit dem Mantelabschnitt 84 verbunden. Die Verbindungsabschnitte 88 sind leicht gebogene Streben und verlaufen schräg von radial innen nach radial außen.

Die radial äußere auslassseitige Endscheibe 68 ist im Bereich ihrer radial äußeren Umfangsseite als sogenannte Doppelradialdichtung 90 ausgestaltet. Die Doppelradialdichtung 90 überragt das Hauptfilterelement 44, im Besonderen den radial äußeren Filterbalg 46, in axialer Richtung und in radialer Richtung. Der Dichtungsstützabschnitt 86 ist in die Doppelradialdichtung 90 eingebettet und stützt diese mechanisch. Der Dichtungsstützabschnitt 86 bildet eine Versteifung für die Radialdichtung 90.

An der radial äußeren Umfangsseite weist die Doppelradialdichtung 90 einen rohluftseitigen Dichtungshöcker 92 und einen reinluftseitigen Dichtungshöcker 94 auf, die axial zueinander beabstandet sind. Die Dichtungshöcker 92 erstrecken sich jeweils umfangsmäßig geschlossen, koaxial zur Achse 32. Der reinluftseitige Dichtungshöcker 94 befindet sich neben dem freien Stirnrand der Doppelradialdichtung 90 auf der der auslassseitigen Stirnseite des radial äußeren Filterbalgs 46 abgewandten Seite. Der rohluftseitige Dichtungshöcker 92 befindet sich axial etwa auf Höhe der auslassseitigen Stirnseite des radial äußeren Filterbalgs 46.

Im Bereich des rohluftseitigen Dichtungshöckers 92 kann die Doppelradialdichtung 90 die gleiche Härte und das gleiche Material aufweisen wie im Bereich des reinluftseitigen Dichtungshöckers 94. Alternativ kann die Doppelradialdichtung 90 im Bereich des rohluftseitigen Dichtungshöckers 92 eine andere Härte und/oder ein anderes Material aufweisen als im Bereich des reinluftseitigen Dichtungshöckers 94. Bevorzugt kann die Doppelradialdichtung 90 im Bereich des rohluftseitigen Dichtungshöckers 92 härter sein als im Bereich des reinluftseitigen Dichtungshöckers 94.

Die Doppelradialdichtung 90 ist entsprechend der radial äußeren auslassseitigen Endscheibe 68 aus einem elastischen Material. Auf ihrer der auslassseitigen Stirnseite des radial äußeren Filterbalgs 46 abgewandten Seite erstreckt sich die Doppelradialdichtung 90 insgesamt etwa in Form eines flach-ovalen Hohlzylinders in axialer Richtung. Sie umgibt einen Aufnahmeraum 96 für ein Sekundärfilterelement 98 an der Außenseite des Hauptfilterelements 44. Das Sekundärluftfilterelement 98 ist als quaderförmiges Flachfilterelement ausgestaltet.

Beim Zusammenbau des Hauptfilters 14 wird das Sekundärluftfilterelement 98 durch die zunächst offene Einbauöffnung 40 axial zur Einbau-/Ausbauachse in seine Position gebracht, in der es die Einlassseite des Auslassstutzens 36 abdeckt. Der Filterbalg des Sekundärluftfilterelements 98 erstreckt sich in seiner Einbauposition radial und in Umfangsrichtung bezüglich der Achse 32.

Anschließend wird das Hauptfilterelement 44 mit seiner auslassseitigen Stirnseite 54 voran und mit seiner Elementachse koaxial zur Gehäuseachse und zur Einbau-/Ausbauachse durch die Einbauöffnung 40 in den Gehäuseinnenraum 34 des Gehäusetopfs 42 gesteckt. Kurz vor Erreichen der Endposition stößt der reinluftseitige Dichtungshöcker 94 an einer radial inneren Umfangsseite einer Gehäusedichtfläche 100 des Gehäusetopfs 42 an. Der reinluftseitige Dichtungshöcker 94 stützt sich dann in radialer Richtung an der Gehäusedichtfläche 100 ab.

Anschließend wird der Gehäusedeckel 38 axial zur Einbau-Ausbauachse auf die Einbauöffnung 40 gesetzt und mittels hier nicht weiter interessierender Klammern in axialer Richtung gegen den Gehäusetopf 42 verspannt. Dabei presst der Gehäusedeckel 38 mit seiner Innenseite gegen die Distanzstege 62 des Hauptfilterelements 44. Die Axialkraft wird von den Distanzstegen 62 auf die einlassseitige Endscheibe 56 auf den Stützrahmen 76 und von diesem auf die auslassseitigen Endscheiben 68 und 70 übertragen. Das Hauptfilterelement 44 wird mittels der Axialkraft beim Verschließen des Gehäusedeckels 38 in axialer Richtung weiter in den Gehäuseinnenraum 34 geschoben. Dabei gleitet der reinluftseitige Dichtungshöcker 94 an der Gehäusedichtfläche 100 entlang. Der rohluftseitige Dichtungshöcker 92 kommt ebenfalls mit der Gehäusedichtfläche 100 zusammen und gleitet an dieser entlang in axialer Richtung.

In der in den Figuren 1 bis 4, 7 und 8 gezeigten Endposition stützt sich ein freier Dichtungsstirnrand 102 der Doppelradialdichtung 90 an einem entsprechenden gehäuseseitigen Absatz des Gehäusetopfs 42 in axialer Richtung ab. Die Dichtungshöcker 92 und 94 wirken mit der Gehäusedichtfläche 100 jeweils radial dichtend zusammen.

Die Gehäusedichtfläche 100 hat die Form eines radial inneren Umfangsmantels eines koaxialen, flach-ovalen Zylinders entsprechend dem radial äußeren Profil der Doppelradialdichtung 90. Die Gehäusedichtfläche 100 ist von der Einbauöffnung 40 in axialer Richtung betrachtet einfach nach innen abgestuft.

In der Endposition stützen sich die Distanzstege 62 gegen die Innenseite des Gehäusedeckels 38 ab und wirken so als Distanzelemente. Zwischen der den Filterbälgen 46 und 48 axial abgewandten Außenseite der einlassseitigen Endscheibe 56 und der Innenseite des Gehäusedeckels 48 wird so ein einlassseitiger Luftströmungsbereich 104 frei gehalten, durch den Luft von der Umfangsseite des Hauptfilterelements 44 zur Einlassöffnung 58 gelangen kann.

In der Endposition befindet sich ein Teil des Sekundärluftfilterelements 98 platzsparend innerhalb des Aufnahmeraums 96 des Hauptfilterelements 44.

Beim Betrieb der Brennkraftmaschine wird Umgebungsluft durch den Luftfilter 10 gesaugt. Die Luft durchströmt zunächst den Vorfilter 12, wo mitgetragene Partikel mittels der Zyklonabscheider 18 ausgetragen werden. Die vorgereinigte Luft durchströmt das Vorfiltergehäuse 22, den Vorfilterauslassstutzen 24 und den Verbindungsschlauch 26 und gelangt durch den Einlassstutzen 28 in den Gehäuseinnenraum 34 des Hauptfilters 14. Dort strömt ein Teil der Luft durch den radial äußeren Filterbalg 46 von radial außen nach radial innen und gelangt gereinigt in den radial äußeren Elementinnenraum 64.

Ein anderer Teil der Luft gelangt nach einer Änderung der mittleren Strömungsrichtung um etwa 90 Grad etwa axial zur Achse 32 in den einlassseitigen Luftströmungsbereich 104. Die Luft durchströmt die Zwischenräume zwischen den Distanzstegen 62 und gelangt zur Einlassöffnung 58. Die Luft strömt dem radial inneren Elementinnenraum 60 zu. Sie durchströmt den radial inneren Filterbalg 48 von radial innen nach radial außen, wird gereinigt und gelangt ebenfalls in den radial äußeren Elementinnenraum 64.

Die gereinigte Luft aus dem radial äußeren Elementinnenraum 64 strömt durch die Auslassöffnung 66 in einen Zwischenraum zwischen dem Hauptfilterelement 44 und dem Sekundärfilterelement 98. Die gereinigte Luft durchströmt das Sekundärfilterelement 98, wird dort von etwaigen kleineren Partikeln befreit und verlässt schließlich den Luftfilter 10 durch den Auslassstutzen 36 und gelangt zur Brennkraftmaschine.

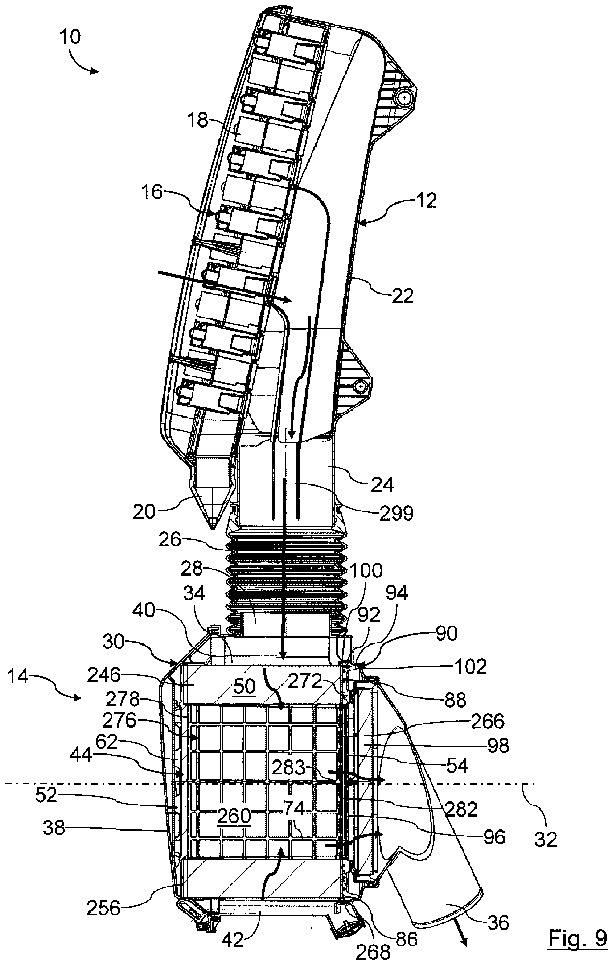

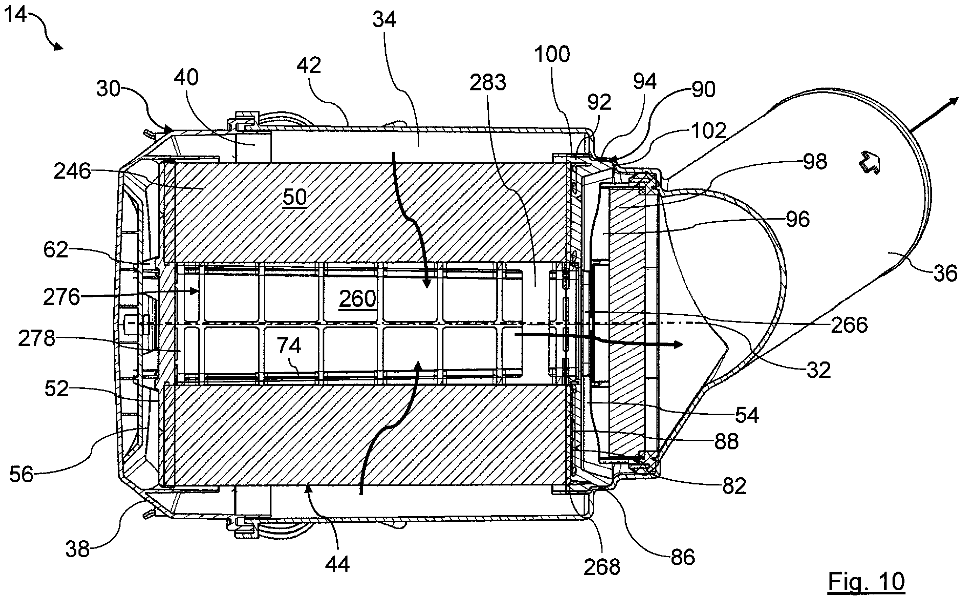

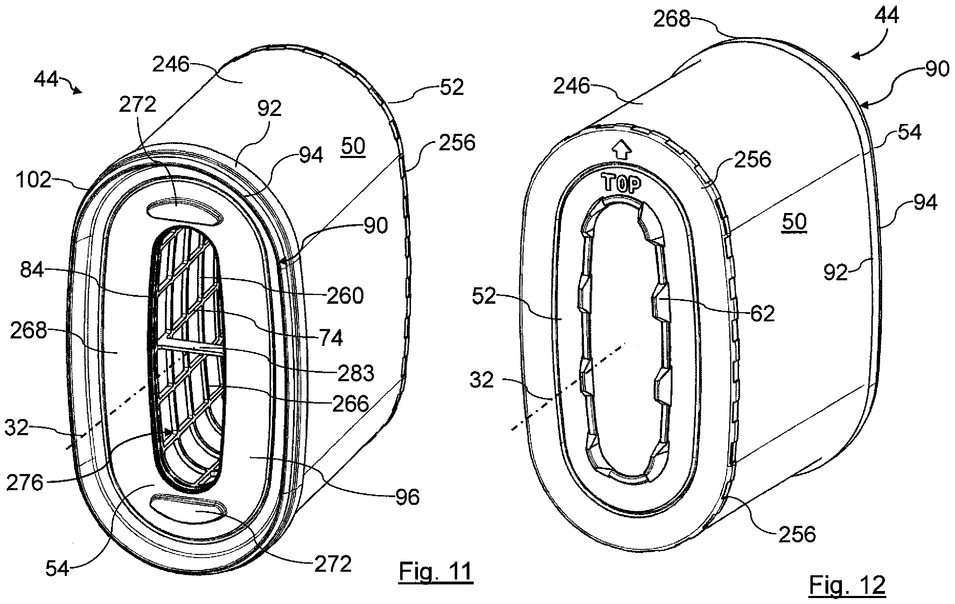

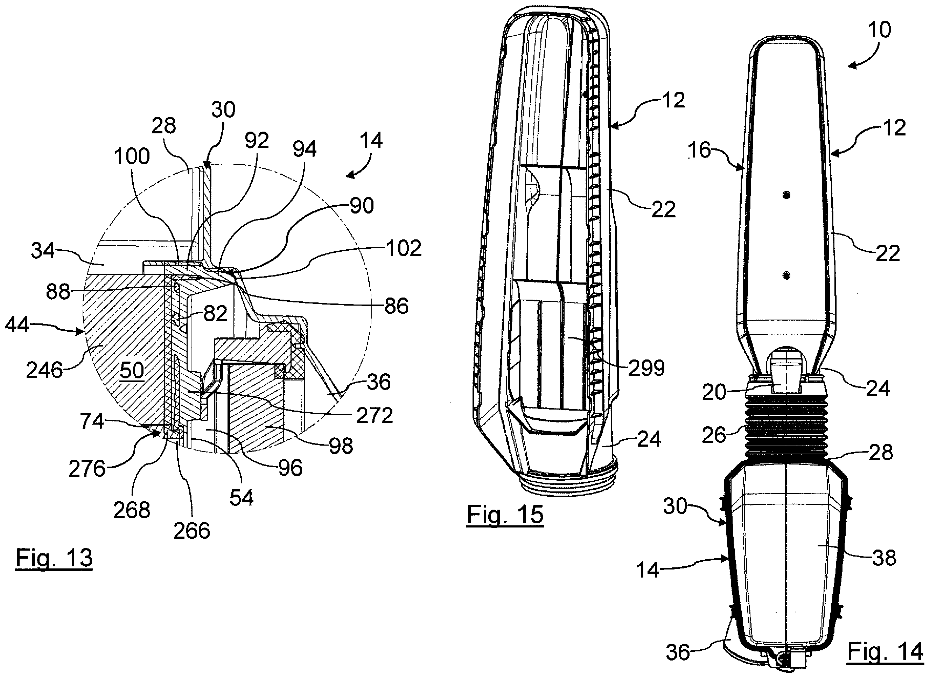

In den Figuren 9 bis 15 ist ein Luftfilter 10 gemäß einem zweiten Ausführungsbeispiel gezeigt. Diejenigen Elemente, die zu denen des ersten Ausführungsbeispiels aus den Figuren 1 bis 8 ähnlich sind, sind mit denselben Bezugszeichen versehen.

Im Unterschied zum ersten Ausführungsbeispiel weist beim zweiten Ausführungsbeispiel das Hauptfilterelement 44 lediglich einen einfachen Filterbalg 246 mit einem einzigen Elementinnenraum 260 anstelle von zwei Filterbälgen auf. Der Filterbalg 246 hat eine gerade flach-ovalzylindrische Form.

Eine einlassseitige Endscheibe 256 ist beim zweiten Ausführungsbeispiel durchgängig geschlossen und weist im Unterschied zum ersten Ausführungsbeispiel keine Einlassöffnung auf. Mit der einlassseitigen Endscheibe 256 wird der Elementinnenraum 260 des Filterbalgs 246 auf der einlassseitigen Stirnseite 52 verschlossen.

Die einlassseitige Endscheibe 256 weist insgesamt acht Distanzstege 62 auf.

Ferner ist anstelle der zweigeteilten auslassseitigen Endscheibe bestehend aus der radial inneren auslassseitigen Endscheibe und der radial äußeren auslassseitigen Endscheibe bei dem zweiten Ausführungsbeispiel eine zusammenhängende auslassseitige Endscheibe 268 vorgesehen. Die auslassseitige Endscheibe 268 weist eine zentrale, flach-ovale zur Elementachse 32 koaxiale Auslassöffnung 266 auf.

Anstelle des auslassseitigen Stützstegs 72 sind beim zweiten Ausführungsbeispiel zwei auslassseitige Stützstege 272 vorgesehen, die sich an bezüglich der Elementachse 32 gegenüberliegenden schmalen Seiten der auslassseitigen Endscheibe 268 radial außerhalb der Auslassöffnung 266 befinden.

Bei dem Stützrahmen 276 des zweiten Ausführungsbeispiels erstreckt sich im Unterschied zum Stützrahmen aus dem ersten Ausführungsbeispiel ein einlassseitiger Umfangsrahmenabschnitt 278 umfangsmäßig entlang der einlassseitigen Stirnseite 52 des Filterbalgs 246. Der einlassseitige Umfangsrahmenabschnitt 278 kann ähnlich oder unterschiedlich aufgebaut sein wie der einlassseitige Umfangsrahmenabschnitt 78 beim ersten Ausführungsbeispiel.

Auf einen radial inneren auslassseitigen Umfangsrahmenabschnitt wie beim ersten Ausführungsbeispiel wird beim zweiten Ausführungsbeispiel verzichtet. Der auslassseitige Umfangsrahmenabschnitt 82 beim zweiten Ausführungsbeispiel kann ähnlich oder unterschiedlich aufgebaut sein wie der radial äußere auslassseitige Umfangsrahmenabschnitt 82 des ersten Ausführungsbeispiels.

Beim zweiten Ausführungsbeispiel weist der Stützrahmen 276 im Bereich seines der auslassseitigen Stirnseite 54 zugewandten Endes zusätzlich eine Stützstrebe 283 auf. Die Stützstrebe 283 erstreckt sich in Richtung der kurzen Querachse des ovalen Stützrahmens 276 und senkrecht zur Elementachse 32 quer durch den Elementinnenraum 260. Die Stützstrebe 283 dient dem Abstützen der langen flachen Seiten des Filterbalgs 246.

Im Übrigen weist beim zweiten Ausführungsbeispiel der Vorfilter 12 abströmseitig der Zyklonbox 16 eine Mehrzahl von Leitgeometrien 299 auf. Mit den Leitgeometrien 299 kann beim Betrieb des Luftfilters 10 ein Unterdruck vergleichmäßigt werden.

## Patentansprüche

1. Filter (10) zur Filtrierung von Fluid, insbesondere Luft, insbesondere einer Brennkraftmaschine, insbesondere eines Kraftfahrzeugs, mit wenigstens einem Filtergehäuse (30), welches wenigstens einen Einlass (28) für zu filtrierendes Fluid und wenigstens einen Auslass (36) für filtriertes Fluid aufweist, und mit wenigstens einem Hohlfilterelement, insbesondere Mehrfachbalg-Hohlfilterelement (44), mit wenigstens einem Filterbalg (46, 48), welcher wenigstens ein zur Filtrierung des Fluids durchströmbares Filtermedium (50) aufweist und welcher einen Elementinnenraum (60, 64) begrenzt, mit wenigstens einem Endkörper (56, 68, 70) an einer bezüglich einer Elementachse (32) axial vorderen und/oder einer hinteren Stirnseite (52, 54) des Hohlfilterelements (44) und mit wenigstens einer Dichtung (90), die bezüglich der Elementachse (32) umfangsmäßig im Bereich einer der Stirnseiten (54) des Hohlfilterelements (44) angeordnet ist und den Endkörper (68, 70) bezüglich der Elementachse (32) axial überragt, wobei der Endkörper fest mit dem Filterbalg verbunden ist und die Dichtung einstückig mit dem Endkörper verbunden ist, wobei das Filtergehäuse (30) wenigstens einen ersten Gehäuseteil (42) mit wenigstens einer Einbauöffnung (40) für das wenigstens eine Hohlfilterelement (44) aufweist, die mit wenigstens einem zweiten Gehäuseteil (38) verschlossen werden kann, wobei das Hohlfilterelement (44) derart in dem Gehäuse anordenbar ist, dass es den wenigstens einen Einlass (28) von dem wenigstens einen Auslass (36) trennt, **dadurch gekennzeichnet, dass** das Filtergehäuse (30) wenigstens eine einfach nach innen abgestufte Dichtfläche (100) aufweist und dass die wenigstens eine Dichtung (90) wenigstens zwei parallele jeweils bezüglich der Elementachse umfangsmäßig zusammenhängend geschlossene radial äußere, axial und radial zueinander beabstandete Dichtungsabschnitte (92, 94) aufweist, wobei die Dichtung (90) des Filterelements und die Dichtfläche (100) des Filtergehäuses (30) bezüglich der Elementachse (32) radial dichtend zusammenwirken, so dass eine Doppelradialdichtung ausgebildet ist.

2. Filter nach Anspruch 1, **dadurch gekennzeichnet, dass** das Hohlfilterelement ein Mehrfachbalg-Hohlfilterelement (44) mit wenigstens zwei Filterbälgen (46,48) ist.

3. Filter nach Anspruch 1 oder 2, **dadurch gekennzeichnet, dass** eine Einbau-/ Ausbauachse des Filters (10), zu der parallel, axial oder koaxial das Hohlfilterelement (44) in das Filtergehäuse (30) eingebaut und aus dem Filtergehäuse (30) ausgebaut werden kann, axial, koaxial oder parallel zur Elementachse (32) verläuft.

4. Filter nach einem der vorigen Ansprüche, **dadurch gekennzeichnet, dass** wenigstens ein Endkörper (56, 70) wenigstens die entsprechende Stirnseite (52, 54) des Hohlfilterelements (44) wenigstens teilweise verschließt.

5. Filter nach einem der vorigen Ansprüche, **dadurch gekennzeichnet, dass** die wenigstens eine Dichtung (90) wenigstens einen bezüglich der Elementachse (32) radial äußeren Filterbalg (46) und/oder wenigstens einen Endkörper (68) wenigstens abschnittsweise radial überragt.

6. Filter nach einem der vorigen Ansprüche, **dadurch gekennzeichnet, dass** wenigstens ein Stützkörper (76), insbesondere ein Stützrahmen, vorgesehen ist wenigstens zur Unterstützung wenigstens eines Endkörpers (56, 68, 70) und/oder der wenigstens einen Dichtung (90).

7. Filter nach einem der vorigen Ansprüche, **dadurch gekennzeichnet, dass** die wenigstens eine Dichtung (90) wenigstens eine Aufnahme, insbesondere einen Aufnahmeraum (96), für wenigstens einen Abschnitt wenigstens eines Sekundärfilterelementes (98) des Filters (10) wenigstens mit bildet.

8. Verwendung eines Hohlfilterelements, insbesondere Mehrfachbalg-Hohlfilterelement (44), mit wenigstens einem Filterbalg (46, 48), welcher wenigstens ein zur Filtrierung eines Fluids, insbesondere Luft, durchströmbares Filtermedium (50) aufweist und welcher einen Elementinnenraum (60, 64) begrenzt, mit wenigstens einem Endkörper (56, 68, 70) an einer bezüglich einer Elementachse (32) axial vorderen und/oder einer hinteren Stirnseite (52, 54) des Hohlfilterelements (44) und mit wenigstens einer Dichtung (90), die bezüglich der Elementachse (32) umfangsmäßig im Bereich einer der Stirnseiten (54) des Hohlfilterelements (44) angeordnet ist und den Endkörper (68, 70) bezüglich der Elementachse (32) axial überragt, wobei der Endkörper (68, 70) fest mit dem Filterbalg (46, 48) verbunden ist und die Dichtung (90) einstückig mit dem Endkörper (68, 70) verbunden ist, wobei die wenigstens eine Dichtung (90) wenigstens zwei parallele jeweils bezüglich der Elementachse umfangsmäßig zusammenhängend geschlossene radial äußere, axial und radial zueinander beabstandete Dichtungsabschnitte (92, 94) aufweist, in einem Filtergehäuse (30) eines Filters zur Filtrierung von Fluid, welches wenigstens einen Einlass (28) für zu filtrierendes Fluid und wenigstens einen Auslass (36) für filtriertes Fluid aufweist und welches wenigstens einen ersten Gehäuseteil (42) mit wenigstens einer Einbauöffnung (40) für das wenigstens eine Hohlfilterelement (44) aufweist, die mit wenigstens einem zweiten Gehäuseteil (38) verschlossen werden kann, wobei das Filtergehäuse (30) wenigstens eine einfach nach innen abgestufte Dichtfläche (100) aufweist, wobei das Hohlfilterelement (44) derart in das Filtergehäuse (30) eingesetzt wird, dass es den wenigstens einen Einlass (28) von dem wenigstens einen Auslass (36) trennt, wobei die Dichtung des Filterelements (30) und die Dichtfläche (100) des Filtergehäuses (30) bezüglich der Elementachse (32) unter Ausbildung einer Doppelradialdichtung radial dichtend zusammenwirken.

## Claims

1. Filter (10) for filtering fluid, in particular air, in particular of an internal combustion engine, in particular of a motor vehicle, with at least one filter housing (30) which features at least one inlet (28) for fluid to be filtered and at leas tone outlet (36) for filtered fluid, and with at least one hollow filter element, in particular multiple bellows hollow filter element (44), with at least one filter bellows (46, 48) which features at least one filter medium (50) allowing passage therethrough for filtering the fluid and which delimits an element interior space (60, 64), with at least one end body (56, 68, 70) on an axially front and/or rear front face (52, 54) of the hollow filter element (44) with respect to an element axis (32) and with at least one seal (90) which is disposed, with respect to the element axis (32), circumferentially in the area of one of the front faces (54) of the hollow filter element (44) and axially protrudes beyond the end body (68, 70) with respect to the element axis (32), wherein the end body is firmly connected to the filter bellows and the seal is integrally connected to the end body, wherein the filter housing (30) features at least one first housing component (42) with at least one mounting opening (40) for the at least one hollow filter element (44), which mounting opening can be closed with at least a second housing component (38), wherein the hollow filter element (44) can be disposed in the housing in such a way that it separates the at least one inlet (28) from the at least one outlet (36), **characterized in that** the filter housing (30) features at least one simply inwardly stepped sealing surface (100) and that the at least one seal (90) features at least two parallel radially outer, axially and radially sealing portions (92, 94) spaced from one another, each circumferentially continuously closed with respect to the element axis, wherein the seal (90) of the filter element and the sealing surface (100) of the filter housing (30) radially interact with respect to the element axis (32) so that a double radial seal is realized.

2. Filter according to claim 1, **characterized in that** the hollow filter element is a multiple bellows hollow filter element (44) with at least two filter bellows (46, 48).

3. Filter according to claim 1 or 2, **characterized in that** a mounting axis/removal axis of the filter (10), in relation to which the hollow filter element (44) can be installed into the filter housing (30) and removed from the filter housing (30) in parallel, axially or coaxially, extends axially, coaxially or in parallel to the element axis (32).

4. Filter according to one of the preceding claims, **characterized in that** at least one end body (56, 70) closes at least partially at least the corresponding end face (52, 54) of the hollow filter element (44).

5. Filter according to one of the preceding claims, **characterized in that** at least one seal (90) projects at least radially sectionwise beyond a radial outer filter bellows (46) with respect to the element axis (32) and/or at least one end body (68).

6. Filter according to one of the preceding claims, **characterized in that** at least one support body (76), in particular a support frame, is provided at least for supporting at least one end body (56, 68, 70) and/or the at least one seal (90).

7. Filter according to one of the preceding claims, **characterized in that** the at least one seal (90) at least contributes to form at least one receptacle, in particular a receiving space (96), for at least one portion of at least one secondary filter element (98) of the filter (10).

8. Use of a hollow filter element, in particular multiple bellows hollow filter element (44), with at least one filter bellows (46, 48) which features at least one filter medium (50) allowing passage therethrough for filtering a fluid, in particular air, and which delimits an element interior space (60, 64), with at least one end body (56, 68, 70) on an axially front and/or rear front face (52, 54) of the hollow filter element (44) with respect to an element axis (32) and with at least one seal (90) which is disposed, with respect to the element axis (32), circumferentially in the area of one of the front faces (54) of the hollow filter element (44) and axially protrudes beyond the end body (68, 70), wherein the end body (68, 70) is firmly connected to the filter bellows (46, 48) and the seal (90) is integrally connected to the end body (68, 70), wherein the at least one seal (90) features at least two parallel radially outer, axially and radially sealing portions (92, 94) spaced from one another, each circumferentially continuously closed with respect to the element axis, in a filter housing (30) of a filter for filtering fluid, which features at least one inlet (28) for fluid to be filtered and at least one outlet (36) for filtered fluid and which features at least one first housing component (42) with at least one mounting opening (40) for the at least one hollow filter element (44), which mounting opening can be closed with at least one second housing component (38), wherein the filter housing (30) features at least one simply inwardly stepped sealing surface (100), wherein the hollow filter element (44) is inserted into the filter housing (30) in such a way that it separates the at least one inlet (28) from the at least one outlet (36), wherein the seal (90) of the filter element and the sealing surface (100) of the filter housing (30) radially interact with respect to the element axis (32) so that a double radial seal is realized.

## Revendications

1. Filtre (10) destiné au filtrage de fluides, notamment d'air, notamment d'un moteur à combustion interne, notamment d'un véhicule automobile, avec au moins un boîtier de filtre (30) qui présente au moins une entrée (28) pour le fluide à filtrer et au moins une sortie (36) pour le fluide filtré, et avec au moins un élément de filtre creux, notamment un élément de filtre creux à soufflet multiple (44), avec au moins un soufflet de filtre (46, 48) qui comporte au moins un milieu filtrant (50) pouvant être parcouru et destiné au filtrage du fluide et qui limite un espace intérieur de l'élément (60, 64), avec au moins un élément d'extrémité (56, 68, 70) situé sur une face frontale (52, 54) avant en sens axial et/ou arrière de l'élément de filtre creux (44) par rapport à un axe de l'élément (32), et avec au moins un joint (90) placé, par rapport à l'axe de l'élément (32), en sens circonférentiel dans la zone d'une des faces frontales (54) de l'élément de filtre creux (44) et dépassant en sens axial de l'élément d'extrémité (68, 70) par rapport à l'axe de l'élément (32), l'élément d'extrémité étant relié de manière fixe au soufflet de filtre et le joint étant relié en un bloc à l'élément d'extrémité, le boîtier de filtre (30) comportant au moins une première partie de boîtier (42) avec au moins une ouverture de montage (40) pour l'élément de filtre creux (44), au moins au nombre d'un, cette ouverture de montage pouvant être obturée avec au moins une seconde partie de boîtier (38), l'élément de filtre creux (44) pouvant être disposé dans le boîtier de manière à ce qu'il sépare l'entrée (28), au moins au nombre d'une, de la sortie (36), au moins au nombre d'une, **caractérisé en ce que** le boîtier de filtre (30) comporte au moins une surface d'étanchéité (100) simple étagée vers l'intérieur et que le joint (90), au moins au nombre d'un, comporte au moins deux sections de joint (92, 94) parallèles respectivement par rapport à l'axe de l'élément, fermées de façon continue en sens circonférentiel, extérieures en sens radial, espacées l'une de l'autre en sens axial et radial, le joint (90) de l'élément filtrant et la surface d'étanchéité (100) du boîtier de filtre (30) exerçant une interaction étanchante en sens radial par rapport à l'axe de l'élément (32) de manière à former un joint radial double.

2. Filtre selon la revendication 1, **caractérisé en ce que** l'élément de filtre creux est un élément de filtre creux à soufflet multiple (44) avec au moins deux soufflets de filtre (46, 48).

3. Filtre selon la revendication 1 ou 2, **caractérisé en ce qu'un** axe de montage/démontage du filtre (10) par rapport auquel l'élément de filtre creux (44) peut être monté dans le boîtier de filtre (30) ou démonté du boîtier de filtre (30) de manière parallèle, axiale ou coaxiale évolue en sens axial, coaxial ou parallèle par rapport à l'axe de l'élément (32).

4. Filtre selon l'une des revendications précédentes, **caractérisé en ce qu'au** moins un élément d'extrémité (56, 70) obture, au moins en partie, au moins la face frontale (52, 54) correspondante de l'élément de filtre creux (44).

5. Filtre selon l'une des revendications précédentes, **caractérisé en ce que** le joint (90), au moins au nombre d'un, dépasse d'au moins un soufflet de filtre (46) extérieur en sens radial par rapport à l'axe de l'élément (32) et/ou d'au moins un élément d'extrémité (68), au moins dans certaines sections, en sens radial.

6. Filtre selon l'une des revendications précédentes, **caractérisé en ce qu'au** moins un élément d'appui (76), notamment un cadre de soutien, est prévu, au moins afin de soutenir au moins un élément d'extrémité (56, 68, 70) et/ou le joint (90), au moins au nombre d'un.

7. Filtre selon l'une des revendications précédentes, **caractérisé en ce que** le joint (90), au moins au nombre d'un, contribue au moins à former un logement, notamment un espace de logement (96), pour au moins une section d'au moins un élément filtrant secondaire (98) du filtre (10).

8. Utilisation d'un élément de filtre creux, notamment d'un élément de filtre creux à soufflet multiple (44), avec au moins un soufflet de filtre (46, 48) qui comporte au moins un milieu filtrant (50) pouvant être parcouru et destiné au filtrage du fluide, notamment de l'air, et qui limite un espace intérieur de l'élément (60, 64), avec au moins un élément d'extrémité (56, 68, 70) situé sur une face frontale (52, 54) avant en sens axial et/ou arrière de l'élément de filtre creux (44) par rapport à un axe de l'élément (32), et avec au moins un joint (90) placé, par rapport à l'axe de l'élément (32), en sens circonférentiel dans la zone d'une des faces frontales (54) de l'élément de filtre creux (44) et dépassant en sens axial de l'élément d'extrémité (68, 70) par rapport à l'axe de l'élément (32), l'élément d'extrémité (68, 70) étant relié de manière fixe au soufflet de filtre (46, 48) et le joint (90) étant relié en un bloc à l'élément d'extrémité (68, 70), le joint (90), au moins au nombre d'un, comportant au moins deux sections de joint (92, 94) parallèles respectivement par rapport à l'axe de l'élément, fermées de façon continue en sens circonférentiel, extérieures en sens radial, espacées l'une de l'autre en sens radial et axial, dans un boîtier de filtre (30) d'un filtre destiné au filtrage de fluides qui présente au moins une entrée (28) pour le fluide à filtrer et au moins une sortie (36) pour le fluide filtré et qui comporte au moins une première partie de boîtier (42) avec au moins une ouverture de montage (40) pour l'élément de filtre creux (44), au moins au nombre d'un, cette ouverture de montage pouvant être obturée avec au moins une seconde partie de boîtier (38), le boîtier de filtre (30) comportant au moins une surface d'étanchéité (100) simple étagée vers l'intérieur, l'élément de filtre creux (44) étant inséré dans le boîtier de filtre (30) de manière à ce qu'il sépare l'entrée (28), au moins au nombre d'une, de la sortie (36), au moins au nombre d'une, le joint de l'élément filtrant (39) et la surface d'étanchéité (100) du boîtier de filtre (30) exerçant une interaction étanchante en sens radial par rapport à l'axe de l'élément (32) en formant un joint radial double.
